(19) **Europäisches Patentamt / European Patent Office / Office européen des brevets**

(11) **EP 4 787 725 A1**

(12) **EUROPEAN PATENT APPLICATION**
published in accordance with Art. 153(4) EPC

(43) Date of publication:
**05.08.2026  Bulletin 2026/32**

(21) Application number: **23953823.4**

(22) Date of filing: **28.09.2023**

(51) International Patent Classification (IPC):
**H04B 7/06** (2006.01)

(52) Cooperative Patent Classification (CPC):
**H04B 7/06**

(86) International application number:
**PCT/CN2023/122991**

(87) International publication number:
**WO 2025/065679 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen TCL New Technology Co.,
Ltd
Shenzhen, Guangdong 518052 (CN)**

(72) Inventor: **TANG, Xiaoyong
Shenzhen, Guangdong 518052 (CN)**

(74) Representative: **Herrero & Asociados, S.L.
Edificio Aqua - Calle Agustín de Foxá, 4-10, 2ºA
28036 Madrid (ES)**

(54) **CHANNEL MEASUREMENT METHOD, TERMINAL, AND BASE STATION**

(57)     Disclosed in the present disclosure are a channel measurement method, a terminal and a base station. The channel measurement method executed by the terminal comprises: receiving configuration information for channel measurement, which comprises the indicated number of spatial-domain and frequency-domain feature basis vectors; receiving a reference signal for channel measurement; measuring a channel according to the reference signal, and determining channel state information on the basis of the indicated number of spatial-domain and frequency-domain feature basis vectors; and reporting the channel state information (CSI) to the base station, the CSI comprising a precoding matrix indicator (PMI), and the PMI comprising non-zero coefficients reported by the terminal and the number of the non-zero coefficients corresponding to at least one layer and/or at least one polarization direction. The present disclosure can reduce the overhead of terminal reporting.

FIG. 3

**Description**

**Technical Field**

The present disclosure relates to the field of communication technologies, and in particular to a channel measurement method, as well as a terminal and a base station.

**Background**

With the continuous development of various emerging applications, the demand for communication capacity has grown significantly. Multi-Input Multi-Output (MIMO) technology stands as one of the pivotal techniques for enhancing network capacity. In response to the ever-increasing demands of the network, MIMO technology has increasingly adopted larger-scale antenna arrays. Currently, the mainstream antenna arrays in the mid-band of 5G have evolved from 32 Transmit/Receive (TRx) units to 64 TRx units. The 64 TRx configuration offers greater vertical degrees of freedom and enhanced antenna gain compared to the 32 TRx configuration.

Multi-Input Multi-Output (MIMO) systems extensively utilize downlink precoding technology. Network devices, possessing knowledge of the channel state information (CSI), can leverage a precoding matrix that aligns with the channel resources to process the signals intended for transmission. This approach enables the pre-coded signals to be tailored to the channel, thereby minimizing or eliminating the inter-channel interference among user equipment, or reducing the complexity of the signals received by the user devices.

In the existing standards since Release 15, the maximum number of antenna ports supported for Channel State Information Reference Signals (CSI-RS) is limited to 32. When the uplink coverage of a terminal is constrained, the reciprocity of the Time Division Duplex (TDD) channel cannot be exploited for downlink precoding design. Instead, feedback of Channel State Information (CSI) analogous to Frequency Division Duplex (FDD) must be employed to facilitate the design of downlink precoding. Given that the maximum number of antenna ports supported by the current CSI-RS is 32, the advantages of a 64-transmit/receive (TRx) antenna array cannot be effectively realized. Therefore, it is imperative to support CSI-RS with a greater number of antenna ports, such as 64 or 128 antenna ports. However, according to the existing Release 16 eType II Codebook (CB) and Release 17 FeType II port selection codebook, the reporting overhead for the terminal is somewhat correlated with the number of antenna ports; specifically, an increase in the number of antenna ports leads to a corresponding increase in the required reporting overhead. Consequently, for the measurement and reporting of Channel State Information (CSI) involving a greater number of antenna ports, novel solutions must be considered to reduce the feedback overhead experienced by the terminal.

**SUMMARY**

To address the aforementioned issues, the present disclosure provides a channel measurement method, a terminal, and a base station, which are capable of mitigating the feedback overhead associated with reporting channel state measurements by the terminal.

The first aspect of the present disclosure provides a channel measurement method, executed by a terminal, comprising: receiving configuration information for channel measurement, wherein the configuration information comprises the number of indicated spatial domain feature basis vectors and the number of indicated frequency domain feature basis vectors;receiving reference signals for channel measurement;measuring the channel based on the reference signals, and determining channel state information based on the number of indicated spatial domain feature basis vectors and the number of indicated frequency domain feature basis vectors; and reporting the channel state information to the base station, wherein the channel state information comprises a precoding matrix indicator PMI, the PMI comprises non-zero coefficients from a coefficient matrix reported by the terminal and the number of non-zero coefficients corresponding to at least one layer and/or at least one polarization direction.

The second aspect of the present disclosure provides a channel measurement method, executed by a terminal, comprising: receiving configuration information for channel measurement, wherein the configuration information comprises reference resource configuration information for channel measurement, and the configuration information further comprises index information for at least one codebook parameter combination; performing channel measurements based on an indications of the configuration information; wherein the at least one codebook parameter combination comprises a first parameter L and a second parameter $p_v$, with the first parameter representing the number of spatial feature basis vectors to be acquired, and the second parameter being used to characterize the number of frequency domain feature basis vectors to be acquired, such that the at least one codebook parameter combination, in comparison to a corresponding preset codebook parameter combination having a preset first parameter and a preset second parameter, the first parameter that is less than the preset first parameter and/or the second parameter that is less than the preset second parameter.

The third aspect of the present disclosure provides a channel measurement method, executed by a base station, comprising: sending configuration information for channel measurement, wherein the configuration information comprises the number indicated spatial domain feature basis vectors and the number of indicated frequency domain feature basis vectors; sending reference signals for channel measurement; and receiving channel state information reported by the terminal based on the channel measurements obtained from the reference signals, wherein the channel state information comprises a precoding matrix indicator PMI, the PMI comprises non-zero coefficients from a coefficient matrix reported by the terminal and the number of non-zero coefficients corresponding to at least one layer and/or at least one polarization direction.

The fourth aspect of the present disclosure provides a channel measurement method, executed by a base station, comprising: sending configuration information for channel measurement, wherein the configuration information comprises reference resource configuration information for channel measurement, and the configuration information further comprises index information for at least one codebook parameter combination; receiving a report generated from channel measurements by a terminal based on an indications of the configuration information; wherein the at least one codebook parameter combination comprises a first parameter L and a second parameter $p_v$, with the first parameter representing the number of spatial feature basis vectors to be acquired, and the second parameter being used to characterize the number of frequency domain feature basis vectors to be acquired, such that the at least one codebook parameter combination, in comparison to a corresponding preset codebook parameter combination having a preset first parameter and a preset second parameter, the first parameter that is less than the preset first parameter and/or the second parameter that is less than the preset second parameter.

The fifth aspect of the present disclosure provides a terminal, which comprises a processor designed to execute instructions to implement the methods performed by the terminal as described in the aforementioned aspects.

The sixth aspect of the present disclosure offers a base station, which comprises a processor that is configured to execute instructions in order to implement the methods carried out by the base station as delineated in the aforementioned aspects.

Optionally, the PMI is used to enable the base station to construct a precoding matrix and to perform precoding of data through the precoding matrix, wherein coefficients obtained by projecting the precoding matrix onto a spatial domain basis matrix and a frequency domain basis matrix constitute the coefficient matrix, and the coefficients in the coefficient matrix comprise the non-zero coefficients

Optionally, the configuration information comprises a parameter combination index, such that for the parameter combination index, the number of indicated spatial domain feature basis vectors is less than or equal to the corresponding preset number of spatial domain feature basis vectors.

Optionally, the number of indicated spatial domain feature basis vectors is less than or equal to three.

Optionally, the number of indicated spatial domain feature basis vectors differs for different layers.

Optionally, the number of indicated spatial domain feature basis vectors is the same for the first layer and the second layer; and the number of indicated spatial domain feature basis vectors is the same for the third layer and the fourth layer.

Optionally, the configuration information comprises a parameter combination index, such that for the parameter combination index, the number of indicated frequency domain feature basis vectors is less than< or equal to the corresponding preset number of frequency domain feature basis vectors.

Optionally, the number of indicated frequency domain feature basis vectors is characterized by the number of PMI sub-bands corresponding to the precoding matrix, the number of PMI sub-bands contained in the channel quality indicator CQI sub-bands, and the coefficients selected for frequency domain basis vector in a codebook parameter combination.

Optionally, for the first layer or the second layer, the coefficients selected for frequency domain basis vectors in the codebook parameter combination comprise $\frac{1}{8}$ or $\frac{3}{8}$; and/or for the third layer or the fourth layer, the coefficients selected for frequency domain basis vectors in the codebook parameter combination comprise $\frac{3}{8}$ or $\frac{1}{16}$.

Optionally, for the first layer or the second layer, the coefficients selected for frequency domain basis vectors in the codebook parameter combination comprise $\frac{1}{8}$ or $\frac{3}{16}$; and/or for the third layer or the fourth layer, the coefficients selected for frequency domain basis vectors in the codebook parameter combination comprise $\frac{1}{16}$ or $\frac{1}{32}$.

Optionally, the configuration information further comprises a control factor for the maximum number of the non-zero coefficients or the number of the non-zero coefficients, such that the value of the control factor $\beta$ ensures that for the case of reporting the maximum number of he non-zero coefficients for a single layer, there are non-zero coefficients selected for reporting in every column and every row of the coefficient matrix.

Optionally, the number of the non-zero coefficients is characterized by the binary representation of the maximum number of the non-zero coefficients, and the number of bits used to represent the number of the non-zero coefficients is identical to the number of the bits used to represent the maximum number of the non-zero coefficients.

Optionally, the number of the bits representing the maximum number of the non-zero coefficients is obtained by taking the ceiling of the logarithm to the base two of the maximum number of the non-zero coefficients.

Optionally, the number of non-zero coefficients reported by the terminal for each layer is the same, the number of non-zero coefficients for a single layer is reported by the terminal.

Optionally, the number of non-zero coefficients reported by the terminal for the first layer and the second layer is the same, and/or the number of non-zero coefficients reported by the terminal for the third layer and the fourth layer is the same.

Optionally, the number of non-zero coefficients reported by the terminal for the first layer and the second layer is the same, and for the number of non-zero coefficients for the first layer and the second layer, the terminal reports only the number of non-zero coefficients for one layer; and/or the number of non-zero coefficients reported by the terminal for the third layer and the fourth layer is the same, and for the number of non-zero coefficients for the third layer and the fourth layer, the terminal reports only the number of non-zero coefficients for one layer.

Optionally, the number of non-zero coefficients reported by the terminal is identical for each polarization direction, and the terminal reports only the number of non-zero coefficients for a single polarization direction.

Optionally, the non-zero coefficients reported by the terminal are selected from elements of the coefficient matrix, and a sum of row indexes and column indexes of the selected reported elements < a sum of row indexes and column indexes of unselected elements; if a sum of a row index and a column index of two elements is the same, preference is given to selecting an element with a smaller row index or, alternatively, a smaller column index among the two elements.

Optionally, the non-zero coefficients reported by the terminal to the base station are selected from the elements of the coefficient matrix, with a preference for selecting the elements of the coefficient matrix in ascending order either by row or by column for reporting.

Optionally, when a number of the non-zero coefficients to be reported by the terminal=a maximum number of the non-zero coefficients that the terminal is capable of reporting, the terminal gives up reporting the number of the non-zero coefficients.

Optionally, the spatial domain feature basis vector and the frequency domain feature basis vector are represented using discrete Fourier transform (DFT) basis vectors.

Optionally, the number of DFT basis vectors that represent the spatial domain feature basis vector and the frequency domain feature basis vector is associated with a parameter $\gamma$, wherein $0 < \gamma \leq 1$.

Optionally, the number of the DFT basis vectors that characterize the spatial domain feature basis vector and the frequency domain feature basis vector are associated with two parameter $\gamma$ and $\lambda$, and wherein, $0 < \gamma \leq 1$, $0 < \lambda \leq 1$.

The beneficial effects of the present disclosure lie in that, in the embodiments of the present disclosure, the utilization of feature basis vectors (namely the spatial domain feature basis vector and the frequency domain feature basis vector) results in a reduced number of basis vectors required for characterizing the channel or precoding matrix as compared to scenarios employing non-feature basis vectors. Furthermore, the distribution of the magnitudes of the projection coefficients of the precoding matrix onto the feature basis vectors satisfies certain features, enabling the base station to ascertain the positional information of the reported non-zero coefficients. Consequently, the embodiments of the present disclosure can directly report the number of non-zero coefficients corresponding to at least one layer and/or at least one polarization direction based on a tradeoff between reporting overhead and performance, without necessitating the traditional bitmap approach to indicate the positional information of the reported non-zero coefficients. In contrast to the conventional bitmap method, the embodiments of the present disclosure can effectively reduce reporting overhead.

## BRIEF DESCRIPTION OF THE DRAWINGS

In order to elucidate the technical solutions presented in the embodiments of the current invention, a brief introduction to the accompanying drawings that are utilized in the description of these embodiments is provided below. It is apparent that the drawings described in this section represent merely several embodiments of the present disclosure. A person of ordinary skill in the relevant field may derive additional diagrams from these illustrations without engaging in inventive effort. Among these:

FIG. 1 illustrates a schematic representation of the communication control system in accordance with the embodiments of the present disclosure.

FIG. 2 illustrates a block diagram of the terminals and base stations engaged in wireless communication within the communication control system in accordance with the embodiments of the present disclosure.

FIG. 3 illustrates a flowchart of the channel measurement method as implemented in the embodiments of the present disclosure.

FIG. 4 illustrates a schematic representation of an example of coefficients within a coefficient matrix.

FIG. 5 illustrates a schematic representation of another example of coefficients within a coefficient matrix.

FIG. 6a illustrates a schematic depiction of an exemplary selection criterion for coefficients within a coefficient matrix.

FIG. 6b illustrates a schematic representation of an alternative selection criterion for coefficients within a coefficient matrix.

FIG. 7 illustrates a flowchart depicting the channel measurement method according to another embodiment of the present disclosure.

## DETAILED DESCRIPTION

In order to provide a clearer elucidation of the embodiments of the present disclosure or related technologies, a brief overview of several embodiments will be presented below. It is evident that these illustrations represent merely some embodiments of the present disclosure, and individuals possessing ordinary skill in the art may derive additional illustrations from these representations.

For the purpose of facilitating a better understanding of the embodiments of the present disclosure, a brief explanation of the technologies involved in the embodiments of the present disclosure will be provided below.

Downlink precoding technology is a technique utilized in wireless communication, particularly in MIMO systems. In this technology, a network device (or base station, such as gNB) acquires channel state information (CSI) reported by the terminal to ascertain the channel conditions. By employing a precoding matrix that corresponds to the available channel resources, the network device processes the signals intended for transmission. This ensures that the transmitted signals are adapted to the channel following precoding, thereby mitigating or eliminating the impact of inter-device channel conditions, enhancing the strength of the received signal, or reducing the complexity of the signals received by the user equipment.

The precoding matrix employed by the base station for the transmission signals can be obtained through a channel measurement procedure. In this channel measurement process, the base station first transmits configuration information regarding the channel measurement to the terminal. Subsequently, the base station sends downlink channel measurement reference signals, such as Channel State Information Reference Signals (CSI-RS). Utilizing the reference signals dispatched by the base station, the terminal computes the CSI and reports it back to the base station. Finally, based on the CSI reported by the terminal, the base station determines the precoding information for downlink data transmission and proceeds with the downlink data transmission. The channel state information reported by the terminal may comprise, but is not limited to, Precoding Matrix Indicator (PMI), Rank Indicator (RI), Channel Quality Indicator (CQI), Channel State Information Reference Signal (resource indicator), and Layer Indicator (LI), among others. The precoding matrix can be derived from the PMI contained within the CSI reported by the terminal. This precoding matrix can be directly utilized for downlink data transmission or can undergo various beamforming techniques, including Zero Forcing (ZF), Regularized Zero-Forcing (RZF), Signal-to-Leakage-and-Noise Ratio (SLNR) maximization, and Minimum Mean-Squared Error (MMSE), to yield the final precoding matrix employed for downlink data transmission.

Specifically, after determining the spatial domain basis vectors, frequency domain basis vectors, and the elements or coefficients within the coefficient matrix, the terminal transmits feedback to the base station. This enables the base station to construct a precoding matrix based on the spatial domain basis vectors, frequency domain basis vectors, and the coefficients from the coefficient matrix. Each element of the spatial basis vectors can represent the weights associated with individual antenna ports, and the spatial domain basis vectors can be mutually orthogonal. The signals from each antenna port can be superimposed based on the elements of the spatial basis vectors, thereby creating a region of enhanced signal strength in a specific spatial direction. The frequency domain basis vectors can be utilized to represent the variation patterns of the channel in the frequency domain, with each frequency domain basis vector corresponding to a distinct variation pattern. During wireless channel transmission, signals typically traverse multiple paths to reach the receiving antenna, and multipath delays result in frequency selective fading. Therefore, different frequency domain basis vectors can represent the variations of the channel in the frequency domain across different transmission paths. The coefficients within the coefficient matrix are utilized to indicate the weights of the vector pairs formed by a spatial basis vector and a frequency domain basis vector. The base station can determine the precoding matrix based on the spatial domain basis vector index, the frequency domain basis vector index, and the non-zero coefficients reported by the terminal.

In order to enhance the utilization of spectral resources, the base station can transmit data to the terminal through multiple layers, where a layer can be understood as an independently transmittable data stream. The rank of the coefficient matrix, which corresponds to the number of layers, enables the terminal to determine the number of layers based on the coefficient matrix obtained from channel estimation.

The precoding matrix determined by the terminal typically differs from the reported precoding matrix. Due to considerations regarding reporting overhead, the terminal may omit certain coefficients with relatively small values from the coefficient matrix during the reporting process, or these coefficients may be quantized prior to reporting. Consequently, the precoding matrix reconstructed by the base station based on the PMI may exhibit discrepancies with the precoding matrix determined by the terminal due to the quantization of coefficients in the matrix, although they remain fundamentally similar or closely aligned. Furthermore, the terminal usually employs a bitmap approach to indicate the positional information of the reported non-zero coefficients. In this bitmap, a "1" indicates that the corresponding coefficient is a non-zero coefficient that needs to be reported, while a "0" signifies that the corresponding coefficient is zero, thus not requiring reporting. Generally, the terminal reports only those coefficients in the coefficient matrix that are non-zero. From the terminal's perspective, the coefficients selected for reporting are deemed as non-zero coefficients, while from the base station's perspective, the coefficients reported by the terminal are considered non-zero coefficients.

For instance, the existing Rel 16 eType II codebook (Codebook, CB) adopts a three-tier codebook architecture $W = W_1 W_2 W_f^H$, wherein $W_1 \in C^{P \times 2L}$ represents the spatial domain basis matrix consists of spatial domain basis vectors. $W_2 \in C^{2L \times M_v}$ represents a coefficient matrix, the elements or coefficients within this coefficient matrix correspond to the coefficients obtained from the projection of the precoding matrix onto the spatial basis matrix and the frequency domain basis matrix, $W_f \in C^{N3 \times M_v}$ represents the frequency domain basis matrix consists of frequency domain basis vectors, wherein P denotes the number of antenna ports, L denotes the quantity of spatial domain basis vectors selected for a single polarization direction, $M_v$ denotes the number of frequency domain basis vectors corresponding to the v layer, $N_3$ denotes the total number of PMI subbands. In the aforementioned codebook architecture, the dimensional information of different matrices is partially or entirely indicated to the terminal by the base station. For example, L, $M_v$, etc, the base station communicates to the terminal the number of spatial domain basis vectors and frequency domain basis vectors through the combination of codebook parameters, along with control factors that specify the quantity of non-zero coefficients (i.e., the non-zero elements or coefficients within the matrix) that the terminal is required to report, as illustrated in Table 1 below:

Table 1

| Parameter Combination Index | L | $p_v$ | | B |
| --- | --- | --- | --- | --- |
| | | $v \in \{1, 2\}$ | $v \in \{3, 4\}$ | |
| 1 | 2 | 1/4 | 1/8 | 1/4 |
| 2 | 2 | 1/4 | 1/8 | 1/2 |
| 3 | 4 | 1/4 | 1/8 | 1/4 |
| 4 | 4 | 1/4 | 1/8 | 1/2 |
| 5 | 4 | 1/4 | 1/4 | 3/4 |
| 6 | 4 | 1/4 | 1/4 | 1/2 |
| 7 | 6 | 1/2 | - | 1/2 |
| 8 | 6 | 1/4 | - | 3/4 |

Wherein, $M_v = \left\lceil p_v \frac{N_3}{R} \right\rceil$, Rdenotes the number of the PMI subband contained in the CQI subband; $\beta$ represents the maximum number of non-zero coefficients allowed for reporting. For instance, the count of non-zero coefficients reported by the terminal in the first layer can be expressed as $K_0 = \lceil \beta 2LM_1 \rceil$ .

Furthermore, the position of the non-zero coefficients reported $W_2$ is indicated by a bitmap, the length of which is $2LM_v$. Additionally, for the Rel-16 eType II codebook, both the selection of the spatial domain basis matrix and the frequency domain basis matrix are predicated upon a set of orthogonal Discrete Fourier Transform (DFT) vectors. For example, the spatial domain basis matrix $W_1$ is configured as a block diagonal matrix $W_1 = \begin{bmatrix} w & 0 \\ 0 & w \end{bmatrix}$ , wherein the w dimensions is $w \in C^{P/2 \times L}$, whereby the L column vectors of the matrix w are selected from a set of orthogonal DFT vectors of dimension P/2; conversely, the $M_v$ column vectors of the frequency domain basis matrix $W_f$ are chosen from a collection of orthogonal DFT vectors of dimension $N_3$.

In order to enhance the characterization of the channel, several codebook enhancement techniques have been proposed, such as CSI feedback based on feature basis vectors. The acquisition of these feature basis vectors is derived from the statistical features of the channel, thereby better reflecting the sparsity of the channel and consequently reducing the overhead associated with codebook feedback. Here, we present a method for obtaining feature basis vectors as follows:

Step 1: The terminal obtains the channel in the subband dimension, and then averages the subband Resource Block (RB) channel.

$$H_k = \sum_{i=1}^{n} H_i$$

Step 2: Acquisition of the feature basis vector:

The polarization averaging is employed to compute the covariance matrix, which $\bar{H}_k$ and $\bar{H}_k^2$ delineat the channels corresponding to different polarization directions of the sub-bands, $\alpha$ is a filter coefficients.

$$\bar{R} = \sum_{k=1}^{N_3} \left( \bar{H}_k \bar{H}_k^{H} + \bar{H}_k^2 \bar{H}_k^{2^H} \right)$$

$$\bar{R}^t = \alpha \frac{\bar{R}_{t-\Delta t}}{\|\bar{R}_{t-\Delta t}\|_F} + (1-\alpha) \frac{\bar{R}_t}{\|\bar{R}_t\|_F}$$

$$svd(\bar{R}^t) = U\Sigma U^H$$

By concatenating the channels according to the sub-bands (assuming a single receiving antenna), the result is obtained:

$$\tilde{H} = \left[ \bar{H}_1, \bar{H}_2, \dots, \bar{H}_{N_3} \right]$$

Derive the frequency domain feature basis vector:

$$\hat{R} = \sum_{k=1}^{N_3} \left( \tilde{H}_k^{H} \tilde{H}_k + \tilde{H}_k^{2^H} \tilde{H}_k^2 \right)$$

$$\hat{R}^t = \alpha \frac{\hat{R}_{t-\Delta t}}{\|\hat{R}_{t-\Delta t}\|_F} + (1-\alpha) \frac{\hat{R}_t}{\|\hat{R}_t\|_F}$$

$$svd\left(\hat{R}^t\right) = V\xi V^H$$

The first L column of U and the first M column of V are taken as the unquantized spatial domain feature basis vectors B = U(: ,1: L) and frequency domain feature basis vectorsF = V (: ,1: M).

Upon acquiring the spatial domain feature basis vector and the frequency domain feature basis vector, the terminal may project these feature basis vectors onto the orthogonal DFT vector set. It may select a subset or all projection coefficients for quantization and report them to the base station, while concurrently providing the indices of the selected coefficients corresponding to the DFT vectors. Based on the information reported by the terminal, the base station can reconstruct the quantized feature basis vectors. Furthermore, by projecting the acquired channel or (pre-)coding matrix onto the quantized feature basis vectors, the terminal can derive the corresponding PMI information, which it subsequently reports to the base station. The base station, by integrating the reconstructed quantized feature basis vectors along with the PMI information reported by the terminal, is capable of recovering the corresponding channel or (pre-)coding matrix.

Considering the variations in processing complexity associated with different codebooks, as well as the influence of various codebook parameters on the terminal's processing capabilities, it is evident that disparate codebooks and their corresponding parameters impose different demands on terminal processing capacity. To enable terminals to better determine the types of codebooks they can support based on their intrinsic capabilities, the New Radio (NR) protocol stipulates that terminals may report their capability information to the base station. The reporting of supported codebook capability information by the terminal is primarily conducted through a codebook combination approach. A codebook combination encompasses one or more types of codebooks that the terminal supports, with specific combinations being denoted as {codebook1, codebook2, codebook3}, where codebook1 to codebook3 represent distinct types of codebooks. Additionally, for each codebook combination, the terminal is required to report a triplet of information, such as {maximum number of ports per resource, maximum number of resources, maximum total number of ports}. Wherein, the maximum number of ports per resource refers to the number of ports allocated by the base station for each CSI-RS resource assigned to the terminal, the maximum number of resources indicates the highest count of CSI-RS resources supported by the terminal, and the maximum total number of ports signifies the total number of ports supported by the terminal across all CSI-RS resources.

For the R18 CJT (Corporate Joint Transmit) codebook, the ongoing discussions regarding its standardization suggest an evolution based on the R16 eType II codebook and the R17 fType II codebook. The capability reporting from the User Equipment (UE) primarily follows a Feature Group approach. In the current context of the CJT codebook schemes that evolve from the R16 eType II and R17 fType II, the terminal recognizes the support of N = N_TRP and the spatial basis set NL = 1 as a foundational capability for supporting the CJT codebook. Furthermore, the terminal reports the following potential features as part of its capability items for reporting, which may comprise multiple aspects, including:

(1) The CJT codebook supports rank 3 and 4;
(2) The CJT codebook facilitates dynamic Transmission and Reception Point (TRP) selection;
(3) The CJT codebook supports the selection of a spatial basis set from a plurality of candidate spatial basis sets;
(4) The CJT codebook supports a total number of CSI-RS ports for participating collaborative TRPs that exceeds 32.

It is evident that, according to the existing standards, the R18 CJT codebook has evolved from the R16 eType II and R17 FeType II. Consequently, when terminals report capability items/feature sets, they will separately report capability items for the CJT codebook based on R16 eType II and that based on R17 FeType II. Thus, with regard to the aforementioned four capability items/feature sets, terminals will effectively need to utilize eight fields for reporting.

In the context of MIMO CSI feedback, the utilization of feature basis vectors enables a more effective representation of channel sparsity, thereby potentially reducing the number of basis vectors required for characterizing either the channel or the precoding matrix, feature basis vectors can be computed based on the statistical properties of the channel, eliminating the need to select from a wide array of candidate basis vector sets. Consequently, the base station need only specify the requisite number of feature basis vectors through the combination of codebook parameters. However, existing codebook parameter combinations predominantly address scenarios involving non-feature basis vectors. The quantity of elements obtained in the coefficient matrix, derived from the indicated spatial domain and frequency domain basis vectors, generally exceeds the number of non-zero coefficients that the terminal ultimately needs to report. As a result, the terminal is compelled to select specific coefficients from the coefficient matrix for reporting and must indicate the precise locations of these coefficients within the matrix using a bitmap format. The overhead associated with indicating the positions of non-zero coefficients via the bitmap can be substantial. To address this issue, the present invention proposes adaptation strategies for terminal reporting when using feature basis vectors, along with possible codebook parameter combination configurations.

In scenarios involving the utilization of feature basis vectors, the inherent ability of these vectors to effectively represent the features of the channel leads to a specific distribution of the magnitudes of the projection coefficients for the precoding matrix along the feature basis vectors. For instance, it is observed that the magnitudes of the projection coefficients tend to decrease progressively with an increase in the indices of the spatial-frequency domain basis vectors, (notably, this decrease in magnitude is not absolute; however, the use of feature basis vectors is informed by the statistical properties of the channel, and the aforementioned feature is generally satisfied). In light of this, the existing approach of indicating non-zero coefficients via a bitmap incurs substantial overhead. The present disclosure proposes a method that, while balancing reporting overhead and performance, allows for the direct reporting of the number of non-zero coefficients, thereby diverging from the traditional bitmap approach and effectively reducing the reporting overhead.

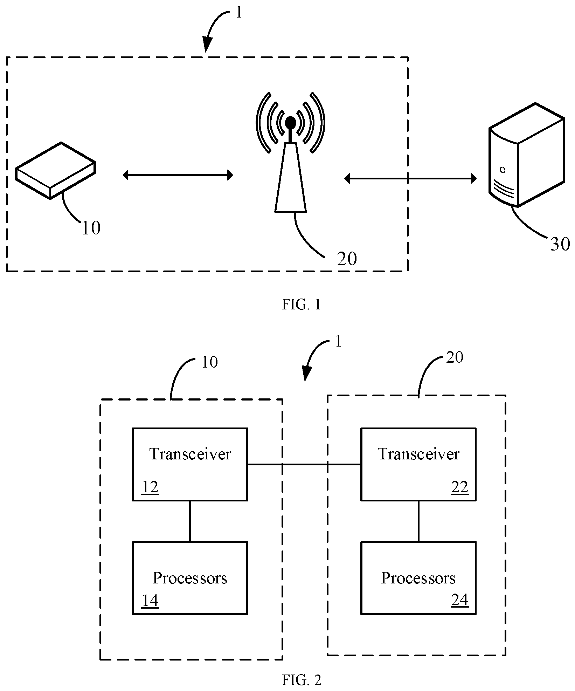

FIG. 1 and 2 depict a possible network architecture applicable to the present disclosure, illustrating both a schematic representation of the communication control system 1 as well as a functional block diagram in accordance with the embodiments of the invention. The communication control system 1 comprises a terminal (such as a UE) 10 and a base station 20, with the terminal 10 and the base station 20 capable of communicating with each other via either wireless or wired means. The terminal 10 and the base station 20 are operable on a NR communication system, enabling the terminal 10 to communicate with the base station 20 through the NR communication system; additionally, both the base station 20 and the terminal 10 may function within other communication systems. The base station 20 and the next-generation core network (5GCN) 30 can also communicate wirelessly or through wired connections. When the communication control system 1 adheres to the new radio standards set forth by the 3rd Generation Partnership Project (3GPP), the next-generation core network (5GCN) 30 serves as the backend service network system, which may incorporate entities such as the User Plane Function (UPF), Session Management Function (SMF), Access and Mobility Management Function (AMF), Unified Data Management (UDM), Policy Control Function (PCF), Control Plane (CP)/User Plane (UP) Separation (CUPS), Authentication Server Function (AUSF), Network Slice Selection Function (NSSF), Network Exposure Function (NEF), among other network entities.

The terminal 10 comprises a transceiver 12 and a processor 14 that are interconnected. The base station 20 consists of a transceiver 22 and a processor 24, which are also coupled together. The transceiver 12 of terminal 10 is responsible for transmitting signals to the base station 20, which is processed by the processor 24 of the base station. Subsequently, the transceiver 22 of base station 20 sends signals back to terminal 10, where they are processed by processor 14. In this manner, terminal 10 and base station 20 facilitate mutual communication. Furthermore, processors 14 and 24 may each incorporate a memory that operatively stores various programs and information necessary for the operation of the connected processors. Such memory may comprise, but is not limited to, Read-Only Memory (ROM), Random Access Memory (RAM), flash memory, storage cards, storage media, or other storage devices. Processors 14 and 24 can embody a general-purpose Central Processing Unit (CPU), Application-Specific Integrated Circuit (ASIC), other chipsets, logic circuits, and/or data processing apparatuses. Transceivers 12 and 22 may encompass baseband circuits and radio frequency (RF) circuits for processing radio frequency signals. When these implementations are executed in software, the techniques described herein may be realized through modules, programs, functions, entities, and the like, designed to perform the functionalities delineated in this document. These modules may reside in memory and be executed by processors. Memory can be integrated within processors or externally connected components, with communication interfaces between these elements being standard industry practices.

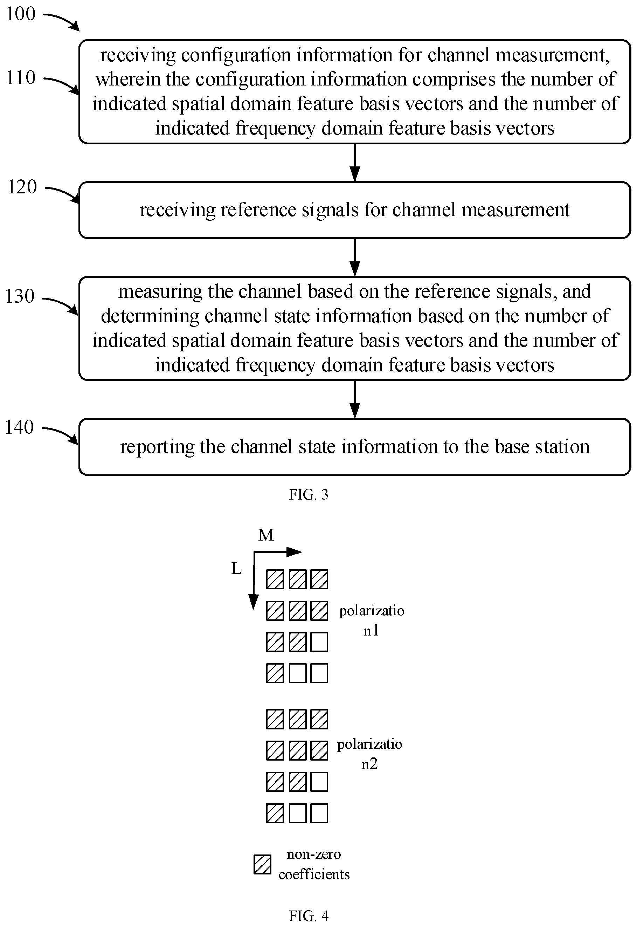

FIG. 3 illustrates a flowchart of the channel measurement method according to an embodiment of the present disclosure. Referring to FIG. 3, the channel measurement method 100, executed by a terminal, is hereby described. The method 100 can be performed by the collaborative operation of processor 14 and transceiver 12 of terminal 10 as depicted in FIG. 2. It is understood that the base station may also execute a channel measurement method corresponding to method 100, which will not be elaborated upon here. The method 100 comprises the following steps:

Step 110. receiving configuration information for channel measurement, wherein the configuration information comprises a number of indicated spatial domain basis vectors and a number of indicated frequency domain feature vectors.

In this step, the terminal receives configuration information from the base station for the purpose of channel measurement. The base station may transmit the configuration information to the terminal via Radio Resource Control (RRC) signaling, which comprises the reference signal resource configuration for the reference signals utilized in channel measurement. The configuration information may also indicate a codebook parameter combination index, which may comprise at least one index from among indices 1 to 8 within the codebook. Consequently, the terminal can perform measurements of the CSI of the base station based on the transmitted reference signals and the indicated codebook parameter combination index. The codebook parameter combination index specified by the base station indicates the number of spatial domain feature basis vectors and the number of frequency domain feature basis vectors that the terminal will employ to compute the CSI. The number of spatial domain feature basis vectors is denoted by the parameter L within the codebook parameter combination, while the number of frequency domain feature basis vectors is characterized by another parameter $p_\upsilon$ within the same combination, wherein, $M_v = \left\lceil p_v \frac{N_3}{R} \right\rceil$. In certain embodiments, the codebook parameter combination index indicated by the base station may not necessitate the specification of the maximum count of non-zero coefficients or a controlling factor β that delineates the number of non-zero coefficients for reporting; however, in other embodiments, the controlling factor may indeed be specified $\beta$.

Step 120, receiving a reference signal for channel measurement.

In this step, the terminal receives reference signals transmitted by the base station, which may comprise CSI-RS, among others. In subsequent steps, the terminal may perform channel measurements based on the reference signal, in accordance with the configuration information received in Step 110.

Step 130 , measuring a channel based on the reference signal, and determining channel state information based on the number of indicated spatial domain feature basis vectors and the number of indicated frequency domain feature basis vectors.

In this step, the terminal performs channel measurements in accordance with Step 120, utilizing the received reference signals to ascertain the CSI. Subsequently, in the ensuing steps, the terminal reports the CSI to the base station, thereby enabling the base station to determine various scheduling informations for the terminal, comprising a number of layers, a precoding matrix, a transmission beam, and a modulation and coding schemes. The CSI may encompass Rank Indication (RI), PMI, and Channel Quality Indicator (CQI). Wherein, RI serves to report the recommended number of layers; PMI serves to the precoding matrix reconstructed from a predefined codebook; and CQI serves to report the current channel quality, which can be determined based on the terminal's estimation of the Signal to Interference plus Noise Ratio (SINR). Furthermore, the non-zero coefficients reported within the coefficient matrix $\mathbf{W}_2$, utilized by the base station to determine the precoding matrix, may be comprised in the PMI. The coefficient matrix $\mathbf{W}_2$ is constituted by coefficients derived from the projection of the precoding matrix onto the spatial domain feature basis matrix and the frequency domain feature basis matrix.

Specifically, in this step, the terminal determines the CSI based on the number of spatial domain feature basis vectors and the number of frequency domain feature basis vectors indicated by the base station in Step 110. For instance, if the indicated number of spatial domain feature basis vectors is 2 and the indicated number of frequency domain feature basis vectors is 4, the terminal can compute the coefficient matrix representing the precoding matrix's projections onto both the spatial domain and frequency domain feature basis vectors, utilizing the 2 spatial and 4 frequency domain feature basis vectors. The terminal may then select a subset or the entirety of the coefficients from this coefficient matrix to report. These selected coefficients, referred to herein as non-zero coefficients, will be reported back to the base station in subsequent steps, enabling the base station to ascertain the precoding matrix. The base station will then utilize this precoding matrix to preprocess the data, ensuring that the pre-coded data signal aligns appropriately with the channel state.

Step 140, reporting the channel state information to the base station.

In this step, the terminal reports the CSI. Specifically, the terminal reports the selected coefficients to the base station. The terminal can report RI, PMI, and CQI to the base station, however, this is not exhaustive, as the terminal may also relay additional information during the reporting process. The aforementioned information can be reported to the base station via the UCI.

In this invention, in addition to reporting the non-zero coefficients, the terminal also reports the number of these non-zero coefficients. Furthermore, the terminal reports the number of non-zero coefficients corresponding to at least one layer, or it may report the number of non-zero coefficients associated with at least one polarization direction. The terminal is also capable of reporting the number of non-zero coefficients for both a layer and a polarization direction. In other words, the PMI comprises both the non-zero coefficients reported by the terminal and the number of non-zero coefficients corresponding to at least one layer and/or at least one polarization direction.

It is important to note that, from the perspective of the terminal, only the selected coefficients that are reported are considered non-zero coefficients. From the perspective of the base station, the coefficients reported by the terminal are regarded as non-zero coefficients, while the coefficients that are not reported are implicitly assumed to be zero.

In certain embodiments, if the number of non-zero coefficients to be reported by the terminal for each layer is the same, the terminal may report only the number of non-zero coefficients for a single layer. In other embodiments, if the number of non-zero coefficients to be reported for the first and second layers is the same, the terminal may suffice by reporting only the number of non-zero coefficients for one of those layers. Similarly, if the number of non-zero coefficients to be reported for the third and fourth layers is the same, the terminal may suffice by reporting only the number of non-zero coefficients for one of those layers Additionally, in other embodiments, if the number of non-zero coefficients to be reported for each (antenna) polarization direction is uniform, the terminal may choose to report only the number of non-zero coefficients for a single polarization direction. This approach serves to reduce the reporting overhead incurred by the terminal.

In the embodiment of the present disclosure, feature basis vectors (specifically, spatial domain feature basis vectors and frequency domain feature basis vectors) are employed. Consequently, in comparison to scenarios utilizing non-feature basis vectors, the embodiment of the present disclosure necessitates fewer basis vectors when characterizing the channel or the precoding matrix. Moreover, the distribution of the magnitudes of the projection coefficients of the precoding matrix onto the feature basis vectors exhibits certain features; for instance, the magnitude of these projection coefficients generally decreases with an increase in the row or column index. Based on this feature, both the base station and the terminal can ascertain the positional information of the non-zero coefficients specifically reported by the terminal, adhering to certain rules and constraints. Therefore, on the basis of balancing reporting overhead and performance, the embodiment of the present disclosure allows for the direct reporting of the number of non-zero coefficients corresponding to at least one layer and/or at least one polarization direction, thereby eliminating the need to utilize traditional bitmap methods to indicate the positional information of the reported non-zero coefficients. Compared to conventional bitmap approaches, the embodiment of the present disclosure can effectively reduce reporting overhead. Further details are elaborated as follows:

For the CSI feedback utilizing feature basis vectors, the feature basis vectors are capable of more effectively representing the sparsity of the channel. The projection coefficients of the channel or precoding matrix onto the feature basis vectors exhibit a trend of diminishing magnitude as the index of the basis vectors increases. Leveraging this feature, the terminal can adhere to specific rules when selecting non-zero coefficients for reporting. Consequently, when the terminal reports the locations of the non-zero coefficients, it can employ a more simplified indication method, thereby obviating the need to utilize a bitmap for such indication.

For instance, traditionally, the positional information of the non-zero coefficients is indicated via a bitmap, the length of which is $LM_v$, wherein, $M_v = \left\lceil p_v \frac{N_3}{R} \right\rceil$, while the actual maximum number of reported non-zero coefficients is $K_0 = \lceil \beta 2 L M_1 \rceil$. In one particular example, $N_3 = 26$, $R = 2$, taking codebook parameter combination index 1 as an example, $p_v = \frac{1}{4}$, $\beta = \frac{1}{4}$, $L = 2M_1$, for the first layer, $M_1 = 4$, therefore, the length of the bitmap is $2LM_1 = 16$ bits, while the actual maximum number of non-zero coefficients that can be reported is $K_0 = \lceil \beta 2 L M_1 \rceil = 4$.

Clearly, taking into account the distribution features of the projection coefficients in $W_2$, if $L = 2$, when the number of required frequency domain basis vectors $M_1 = 2$, four non-zero coefficients can be obtained.. Therefore, the existing codebook parameter indication is not suitable for codebook feedback schemes where the spatial domain and the frequency domain basis vectors serve as the feature basis vectors.

Furthermore, since the feature basis vectors can more effectively represent the sparsity of the channel, the base station is able to indicate a smaller number of spatial domain and frequency domain basis vectors when specifying them. This allows the base station to control the maximum number of non-zero coefficients that the terminal may report based on the number of spatial domain and frequency domain basis vectors, eliminating the need for a dedicated control factor, or allowing the control factor to approach a value of 1.

In certain embodiments, the configuration information comprises a parameter combination index, such that for the parameter combination index, wherein the number of spatial domain feature basis vectors indicated by the base station is less than or equal to the corresponding preset number of spatial domain feature basis vectors. For instance, the number of spatial domain feature basis vectors indicated by the base station may be less than or equal to three, such as one, two, or three. The configuration information also comprises a parameter combination index, such that for the parameter combination index, wherein the number of frequency domain feature basis vectors indicated by the base station is less than or equal to the corresponding preset number of frequency domain feature basis vectors. For example, for the first layer or the second layer, the coefficients selected for frequency domain basis vectors in the codebook parameter combination comprise $\frac{1}{8}$ or $\frac{3}{8}$; and/or for the third layer or the fourth layer, the coefficients selected for frequency domain basis vectors in the codebook parameter combination comprise $\frac{3}{8}$ or $\frac{1}{16}$. The preset number of spatial domain feature basis vectors may correspond to the number indicated in the R16 eType II codebook parameter combination, while the preset number of frequency domain feature basis vectors may correspond to the number indicated in the same codebook parameter combination. The CSI is derived based on the number of spatial domain feature basis vectors and/or the number of frequency domain feature basis vectors indicated by the base station. For example, the codebook parameter combination in embodiments of the present disclosure may be modified based on the R16 eType II codebook parameter combination.

The codebook parameter combinations of the embodiments of the present disclosure may indicate a smaller number of spatial domain and frequency domain feature basis vectors. For instance, as depicted in Table 2, the number of spatial domain feature basis vectors is halved, while the number of frequency domain feature basis vectors is determined by introducing a smaller $p_v$, for example $v \in \{1,2\}$, increase $p_v = \frac{1}{8}, \frac{3}{8}$; $v \in \{3,4\}$, increases $p_v = \frac{3}{8}, \frac{1}{16}$. The number of frequency domain basis vector $M_v = \left\lceil p_v \frac{N_3}{R} \right\rceil$, wherein, $N_3$ indicates the number of PMI subbands corresponding to the precoding matrix, R indicates the number of PMI subbands corresponding to CQI subbands, $p_v$ is the coefficients selected for frequency domain basis vectors in the codebook parameter combination. In the embodiments of the present disclosure, the codebook parameter combinations indicated by the base station comprise at least one or more of the following codebook parameter combinations:

Table 2

| Parameter Combination Index | L | $p_v$ | |
| --- | --- | --- | --- |
| | | $v \in \{1, 2\}$ | $v \in \{3, 4\}$ |
| 1 | 1 | 1/8 | 1/16 |
| 2 | 1 | 1/4 | 1/8 |
| 3 | 2 | 1/8 | 1/16 |
| 4 | 2 | 1/4 | 1/8 |

(continued)

| Parameter Combination Index | L | $p_\upsilon$ | |
|---|---|---|---|
| | | $\upsilon \in \{1, 2\}$ | $\upsilon \in \{3, 4\}$ |
| 5 | 2 | 3/8 | 3/8 |
| 6 | 2 | 1/2 | 1/4 |
| 7 | 3 | 1/4 | - |
| 8 | 3 | 3/8 | - |

In certain embodiments, regarding the first layer or the second layer, the coefficients for selecting frequency domain basis vectors in the codebook parameter combination $p_\upsilon$ comprise "$\frac{1}{8}$" or "$\frac{1}{16}$"; and/or regarding the third layer or the fourth layer, the coefficients selected for frequency domain basis vectors in the codebook parameter combination $p_\upsilon$ comprise "$\frac{3}{16}$" or "$\frac{1}{16}$" or "$\frac{1}{32}$" For example, as illustrated in Table 3, the codebook parameter combination solely indicates the number of spatial domain and frequency domain feature basis vectors, with the number of frequency domain feature basis vectors being determined by introducing a smaller $p_\upsilon$. For instance, $v \in \{12\}$, increases $p_\upsilon = \frac{1}{8}, \frac{1}{16}$; $v \in \{3,4\}$, increases $p_\upsilon = \frac{3}{16}, \frac{1}{16}, \frac{1}{32}$, the number of frequency domain feature basis vectors is $M_\upsilon = \left\lceil p_\upsilon \frac{N_3}{R} \right\rceil$. In the embodiments of the present disclosure, the codebook parameter combinations indicated by thebase station encompass at least one or more of the following codebook parameter combinations:

Table 3

| Parameter Combination Index | L | $p_\upsilon$ | |
|---|---|---|---|
| | | $\upsilon E \{1, 2\}$ | $\upsilon \in \{3, 4\}$ |
| 1 | 2 | 1/16 | 1/32 |
| 2 | 2 | 1/8 | 1/16 |
| 3 | 4 | 1/16 | 1/32 |
| 4 | 4 | 1/8 | 1/16 |
| 5 | 4 | 3/16 | 3/16 |
| 6 | 4 | 1/4 | 1/8 |
| 7 | 6 | 1/8 | - |
| 8 | 6 | 3/16 | - |

In certain embodiments, the number of spatial domain feature basis vectors indicated by the base station differs for different layers. For instance, the number of indicated spatial domain feature basis vectors is the same for the first layer and the second layer; and the number of indicated spatial domain feature basis vectors is the same for the third layer and the fourth layer. This is elaborated as follows:

Taking into account that the rank of the coefficient matrix RI>2(wherein RI can be understood as the number of layers or data streams), the overhead associated with the codebook reporting should not increase significantly compared to the codebook overhead when RI = 2 or the difference in codebook reporting overhead between the two scenarios should remain minimal. Therefore, in order to control the overhead of codebook reporting under high RI conditions, it is appropriate to establish a disparity in the number of corresponding spatial domain feature basis vectors between high RI and low RI scenarios; specifically, the number of spatial domain feature basis vectors corresponding to high RI should be less than or equal to the corresponding to low RI. For instance, the codebook parameter combinations indicated by the base station may be represented in the format of Table 4. In the embodiments of the present disclosure, the codebook parameter combinations indicated by the base station comprise at least one or more of the following combinations, with Table 4 merely providing possible examples; the potential values $L_v$ are not limited to those presented herein.

Table 4

| Parameter Combination Index | $L_v$ | | $p_v$ | |
|---|---|---|---|---|
| | $v \in \{1, 2\}$ | $v \in \{3, 4\}$ | $v \in \{1, 2\}$ | $v \in \{3, 4\}$ |
| 1 | 2 | 2 | 1/16 | 1/32 |
| 2 | 2 | 2 | 1/8 | 1/16 |
| 3 | 4 | 4 | 1/16 | 1/32 |
| 4 | 4 | 2 | 1/8 | 1/16 |
| 5 | 4 | 2 | 3/16 | 3/16 |
| 6 | 4 | 2 | 1/4 | 1/8 |
| 7 | 6 | 4 | 1/8 | - |
| 8 | 6 | 4 | 3/16 | - |

In certain embodiments, the configuration information transmitted by the base station to the terminal additionally encompasses the maximum number of non-zero coefficients or a control factor $\beta$ pertaining to the count of non-zero coefficients. The value of the control factor $\beta$ is configured such that, under conditions where the maximum number of non-zero coefficients for a single layer is reported, each column and each row of the coefficient matrix exhibits non-zero coefficients that are selected for reporting.

In the first example, the codebook parameter combinations are indicative of the control factor $\beta$ utilized to regulate the number of non-zero coefficients. The quantity of frequency domain feature basis vectors is determined by introducing a smaller value $p_v$, for instance, $v \in \{1,2\}$, increases $p_v = \frac{1}{8}, \frac{1}{16}$ ; $v \in \{3,4\}$, *increases* $p_v = \frac{3}{16}, \frac{1}{16}, \frac{1}{32}$ ; the number of the frequency domain feature vectors is $M_v = \left\lceil p_v \frac{N_3}{R} \right\rceil$ ; the maximum number of non-zero coefficients that the base station instructs the terminal to report for a single layer is $K_0 = \lceil 2\beta LM_1 \rceil$ *or* $K_0 = \lfloor 2\beta LM_1 \rfloor$ . The codebook parameter combinations specified by the base station comprise at least one or more of the following combinations, satisfing the condition either $\beta \leq 1$ and , $2L(M_1 - 1) < \lceil 2\beta LM_1 \rceil \leq 2LM_1$ or, $\beta \leq 1$ *and* $2L(M_1 - 1) < \lfloor 2\beta LM_1 \rfloor \leq 2LM_1$ .

Table 5

| Parameter Combination Index | L | $p_v$ | | β |
|---|---|---|---|---|
| | | $v \in \{1, 2\}$ | $v \in \{3, 4\}$ | |
| 1 | 2 | 1/16 | 1/32 | 1 |
| 2 | 2 | 1/8 | 1/16 | 1 |
| 3 | 4 | 1/16 | 1/32 | 1 |
| 4 | 4 | 1/8 | 1/16 | 3/4 |
| 5 | 4 | 3/16 | 3/16 | X |
| 6 | 4 | 1/4 | 1/8 | X |
| 7 | 6 | 1/8 | - | X |
| 8 | 6 | 3/16 | - | X |

The non-zero coefficients reported by the terminal are selected from the elements or coefficients of the coefficient matrix. Given that the feature basis vectors are derived from the statistical features of the channel, it can be observed that, with an increase in the index of the spatial domain and the frequency domain basis vectors, the magnitude of the projection coefficients tends to diminish progressively (though not absolutely). In other words, the magnitude values of the coefficients within the coefficient matrix generally decrease as either the row index or the column index increases. Therefore, when selecting non-zero coefficients, it is preferable to prioritize those with smaller sums of row and column indices. In order to ensure that the values of the control factor $\beta$ satisfy the condition that each column and each row of the coefficient matrix cantains at least one non-zero coefficient selected for reporting, in the context of reporting the maximum number of non-zero coefficients for a single layer, it is possible to establish a lower limit on the number of non-zero coefficients to be reported based on the number of frequency domain feature basis vectors M, that is $2L(M_1 - 1)$. Thus, by constraining the control factor $\beta$ within the range defined by the lower limit and the total number of coefficients (i.e., $2LM_1$), it is ensured that when reporting the maximum number of coefficients, every column and every row of the coefficient matrix will have at least one non-zero coefficient selected for reporting. For instance, as illustrated in FIG. 4, in the case where the non-zero coefficients to be reported are identical for two polarization directions, $L = 4$, $M_1 = 3$, then $16 < \lceil 2\beta LM_1 \rceil \le 24$, $\beta$ can be represented as 3/4. From the perspective of a single polarization direction, then $8 < \lceil \beta LM_1 \rceil \le 12$, it is also conceivable that the value can be 3/4.

In the second example, the codebook parameter combination indicates the control factor $\beta$, which is utilized to regulate the number of non-zero coefficients. The number of frequency domain feature basis vectors is determined by introducing a smaller $p_\upsilon$, for instance, $\upsilon \in \{1,2\}$, increases $p_\upsilon = \frac{1}{8}, \frac{1}{16}$; $\upsilon \in \{3,4\}$, increases $p_\upsilon = \frac{3}{16}, \frac{1}{16}, \frac{1}{32}$; The number of frequency domain feature basis vectors is $M_\upsilon = \left\lceil p_\upsilon \frac{N_3}{R} \right\rceil$. the maximum number of non-zero coefficients at a single layer that the base station instructs the terminal to report is $K_0 = \lceil 2\beta LM_1 \rceil$ or $K_0 = \lfloor 2\beta LM_1 \rfloor$. The codebook parameter combinations indicated by the base station comprise at least one or more of the following combinations of codebook parameters, satisfying the conditions of either $\beta \le 1$ *and* $2M_1(L - 1) < \lceil 2\beta LM_1 \rceil \le 2LM_1$ ; or, $\beta \le 1$ *and* $2M_1(L - 1) < \lfloor 2\beta LM_1 \rfloor \le 2LM_1$.

Table 6

| Parameter Combination Index | L | $p_\upsilon$ | | β |
|---|---|---|---|---|
| | | $\upsilon \in \{1, 2\}$ | $\upsilon \in \{3, 4\}$ | |
| 1 | 2 | 1/16 | 1/32 | 1 |
| 2 | 2 | 1/8 | 1/16 | 1 |
| 3 | 4 | 1/16 | 1/32 | 1 |
| 4 | 4 | 1/8 | 1/16 | 3/4 |
| 5 | 4 | 3/16 | 3/16 | X |
| 6 | 4 | 1/4 | 1/8 | X |
| 7 | 6 | 1/8 | - | X |
| 8 | 6 | 3/16 | - | X |

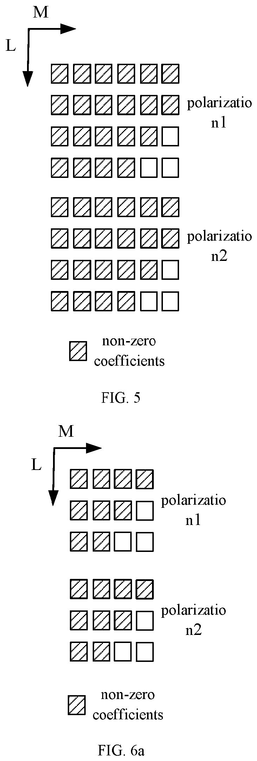

In order to ensure that the values of the control factor $\beta$ satisfy the condition that each column and each row of the coefficient matrix cantains at least one non-zero coefficient selected for reporting, in the context of reporting the maximum number of non-zero coefficients for a single layer, it is possible to establish a lower limit on the number of non-zero coefficients to be reported based on the number of spatial domain feature basis vectors L, that is $2M_1 (L - 1)$. Thus, by constraining the value of the control factor $\beta$ between the lower limit and the maximum number of non-zero coefficients (i.e., $2LM_1$), it can be guaranteed that every column and every row of the coefficient matrix contains a non-zero coefficient selected for reporting when the maximum number of non-zero coefficients for a single layer is reported. As illustrated in FIG. 5, for instance, in the case where the non-zero coefficients to be reported are identical for two polarization directions, $L = 4$, $M_1 = 6$, then $36 < \lceil 2\beta LM_1 \rceil \le 48$, $\beta$ can be represented as 7/8. From the perspective of a single polarization direction, then $18 < \lceil \beta LM_1 \rceil \le 24$, it is also conceivable that the value can be 7/8.

In certain embodiments, the number of non-zero coefficients reported by the terminal is characterized by the binary representation of the maximum number of the non-zero coefficients, and the number of bits used to represent the number of the non-zero coefficients is identical to the number of the bits used to represent the maximum number of the non-zero coefficients. Specifically, the number of bits used to represent the number of the non-zero coefficients is derived by taking the ceiling of the logarithm, with base 2, of the maximum number of non-zero coefficients.

For instance, in the aforementioned embodiments, if the maximum number of non-zero coefficients per layer is $2LM_1$, then the number of bits reported per layer is $\lceil log2^{2LM_1} \rceil$, and the actual number of non-zero coefficients reported corresponds to the decimal representation of the bit number. For example, if $L = 2$, $M_1 = 2$, then the required number of bits is $\lceil log2^{2LM_1} \rceil$ and supposing the reported number of non-zero coefficients is 1, the reported bits would be formatted as 000. Conversely, if the reported number of non-zero coefficients is 7, the reported bits would be represented as 110. This indicates that the count of non-zero coefficients begins from 000 and incrementally increases.

For example, in the aforementioned embodiments, if the maximum number of non-zero coefficients for each layer is $K_0 = \lceil 2\beta LM_1 \rceil$ or $K_0 = \lfloor 2\beta LM_1 \rfloor$, then the number of bits reported per layer is represented as $\lceil log2^{K_0} \rceil$.

In light of the existing codebook indicating the total number of non-zero coefficients reported across all layers in the UCI part 1, the present disclosure's embodiment allows for the omission of reporting the number of non-zero coefficients corresponding to the final layer. This value can be derived by subtracting the sum of the known non-zero coefficients from the total number of non-zero coefficients specified in the UCI part 1.

In certain embodiments, the number of non-zero coefficients reported by the terminal for each layer is identical, whereby the terminal reports the number of non-zero coefficients for a single layer. Specifically, the number of non-zero coefficients reported for each layer is uniform across all layers (i.e., layer common). Consequently, the terminal need only indicate the number of non-zero coefficients for one layer in the UCI part 1. The base station can then determine the total number of non-zero coefficients based on the RI value reported by the terminal, in conjunction with the reported count of non-zero coefficients for the single layer in the UCI part 1.

For instance, the number of bits required to indicate the non-zero coefficients for a single layer is represented by taking the ceiling of the logarithm. In the aforementioned embodiment, if the maximum number of non-zero coefficients for a single layer is $2LM_1$, then the number of bits required for reporting the number of non-zero coefficients in the UCI part 1 is $\lceil log2^{2LM_1} \rceil$.

For example, the number of bits required to indicate the non-zero coefficients for a single layer is represented by taking the ceiling of the logarithm. In the aforementioned embodiment, if the maximum number of non-zero coefficients for a single layer is $K_0 = \lceil 2\beta LM_1 \rceil$ or $K_0 = \lfloor 2\beta LM_1 \rfloor$, then the number of bits required for reporting the number of non-zero coefficients in UCI part 1 is $\lceil log2^{K_0} \rceil$.

In certain embodiments, the number of non-zero coefficients reported by the terminal for the first layer and the second layer is identical (i.e., the first layer and the second layer are layer common), and/or the number of non-zero coefficients reported by the terminal for the third layer and the fourth layer is the same (i.e., the third layer and the fourth layer are layer common). Consequently, when the terminal reports the number of non-zero coefficients for the first layer and the second layer as being identical, it is sufficient for the terminal to report only the number of non-zero coefficients for one of these layers. Similarly, when the terminal reports the number of non-zero coefficients for the third layer and the fourth layer as being the same, the terminal only needs to report the number of non-zero coefficients for one of these layers. Specifically, the number of non-zero coefficients reported by the terminal for each layer is layer common when RI = 2. Furthermore, when RI > 2, the first layer and the second layer are layer common, and when RI = 4, the first layer and second layer are layer common, and/or the third layer and fourth layer are layer common.

For instance, in the aforementioned embodiment, if the maximum number of non-zero coefficients per layer is $2LM_1$, the bit number required to indicate the non-zero coefficients for each layer is determined by taking the ceiling of the logarithm. Therefore, when the Rank Indicator (RI) is less than or equal to 2, the first layer and the second layer are considered layer common, and the number of bits required to indicate the total number of non-zero coefficients in UCI part 1 is $\lceil log2^{2LM_1} \rceil$. Conversely, when the RI is larger than 2, the first layer and the second layer continue to be layer common, while the bit count required to indicate the total number of non-zero coefficients in UCI part 1 is fixed at $2\lceil log2^{2LM_1} \rceil$.

For instance, in the aforementioned embodiment, if the maximum number of non-zero coefficients per layer is $K_0 = \lceil 2\beta LM_1 \rceil$ or $K_0 = \lfloor 2\beta LM_1 \rfloor$, the bit number required to indicate the non-zero coefficients for each layer is expressed by taking the ceiling of the logarithm. Consequently, when the RI is less than or equal to 2, the first layer and the second layer are layer common, and the bit count necessary to indicate the total number of non-zero coefficients in UCI part 1 is $\lceil log2^{K_0} \rceil$ In contrast, when the RI exceeds 2, the first layer and the second layer remain layer common, wherein the bit number required to indicate the total number of non-zero coefficients in UCI part 1 is set at $2\lceil log2^{K_0} \rceil$.

In certain embodiments, the number of non-zero coefficients reported by the terminal is identical for each polarization direction, and the terminal reports only the number of non-zero coefficients for a single polarization direction.

Specifically, considering the polarization correlation of the antennas, the distribution patterns of projection coefficients across different polarization directions are fundamentally consistent. Therefore, in the embodiments of the present disclosure, the indication of non-zero coefficients can be implemented in a manner where each polarization direction is identical (i.e., polarization common). If the indication of non-zero coefficients adopts the polarization common format, when reporting the total number of non-zero coefficients in UCI part 1, only the total number of non-zero coefficients for a single polarization direction needs to be reported, thereby conserving 1 bit in the UCI part 1 report. Similarly, if the indication of the number of non-zero coefficients per layer is provided in UCI part 2, the adoption of polarization common allows for the conservation of an additional 1 bit in the indication of the number of non-zero coefficients for each layer.

In certain embodiments, the sum of the row index and the column index of the elements or coefficients selected for reporting by the terminal is less than the sum of the row index and the column index of the unselected reported elements. Furthermore, if the sum of the row index and the column index of two elements is the same, preference is given to selecting the element with the smaller row index or alternatively, the smaller column index among the two elements.. The principles governing the selection of non-zero coefficients can be articulated as follows. As illustrated in FIG. 6a, in the context of a single polarization direction, the sum of the indices of the reported spatial domain and the frequency domain feature basis vectors is less than that of the nonselected coefficients. In instances where the sums of the row index and column index of two coefficients are the same, the coefficient with the larger row index is selected for reporting. For example, $C_{31}$ and $C_{13}$ report the coefficient $C_{31}$. It should be noted that it is also permissible to select the non-zero coefficient with the larger column index among the two for reporting purposes.

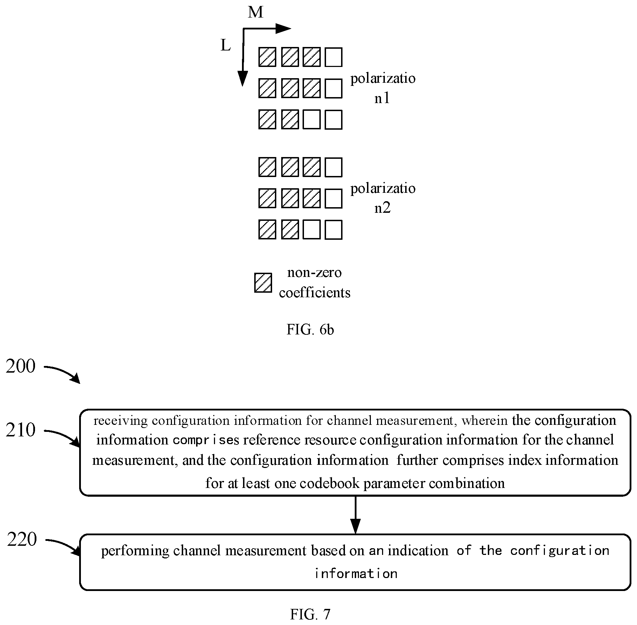

In certain embodiments, the non-zero coefficients reported by the terminal to the base station are selected from the elements or the coefficients of the coefficient matrix, with a preference for selecting the elements in ascending order, either by row or by column. The principles guiding the selection of non-zero coefficients can be articulated as follows. As depicted in FIG. 6b, with respect to a single polarization direction, reporting is conducted in a row and column sequence, with a priority on row-wise reporting, where elements with smaller row indices are reported first. It is important to note that one may also prioritize reporting in a column-wise manner, whereby elements with smaller column indices are reported first.

In certain embodiments, when the number of non-zero coefficients reported by the terminal to the base station is equal to the maximum number of non-zero coefficients that the terminal may report, the terminal gives up the reporting of the number of non-zero coefficients. Specifically, if the number of reported non-zero coefficients $K^{NZ}$ corresponds to the maximum number of non-zero coefficients, then the bit information pertaining to the number of non-zero coefficients is omitted from part 2 of the UCI. For instance, in the aforementioned embodiments, if $K^{NZ} = \sum_{l=1}^{v} K_l^{NZ} = \sum_{l=1}^{v} 2LM_1$, the reporting of the bit information related to the count of non-zero coefficients is given up in part 2 of the UCI; similarly, in the aforementioned embodiments, if $K^{NZ} = \sum_{l=1}^{v} K_l^{NZ} = \sum_{l=1}^{v} \lceil 2\beta LM_1 \rceil$ or $\sum_{l=1}^{v} \lfloor 2\beta LM_1 \rfloor$, then the reporting of the bit information regarding the number of non-zero coefficients is also given up in part 2 of the UCI.

In certain embodiments, the feature basis vectors may be quantified for feedback utilizing the oversampled DFT basis vectors, wherein the number of DFT basis vectors employed for the projection quantization of the spatial domain and the frequency domain feature basis vectors determines the overhead associated with reporting the feature basis vectors. In relation to the codebook parameter combinations mentioned above, a parameter $\gamma$ is introduced to characterize the correlation between the number of DFT basis vectors for the spatial domain feature basis vectors and that for the frequency domain feature basis vectors.

Specifically, the number of DFT basis vectors representing the spatial domain feature basis vectors is $\lceil \gamma * P/2 \rceil$ or $\lfloor \gamma * P/2 \rfloor$, and the number of DFT basis vectors representing the frequency domain feature basis vectors is $\lceil \gamma * N_3 \rceil$ or $\lfloor \gamma * N_3 \rfloor$, wherein $0 < \gamma \le 1$, this configuration has the potential to reduce the reporting overhead associated with the spatial domain and the frequency domain feature basis vectors. The number of different spatial domain and the frequency domain feature basis vectors may vary for different $\gamma$, where P represents the number of antenna ports and N3 denotes the number of PMI sub-bands corresponding to the precoding matrix. The values of the $\gamma$ do not necessitate separate indication but can be determined in conjunction with the indication of the codebook parameter combinations.

In certain embodiments, the feature basis vectors may be quantified for feedback through the utilization of oversampled DFT basis vectors, wherein the number of DFT basis vectors employed for the projection quantization of the spatial domain and the frequency domain feature basis vectors determines the overhead associated with reporting these feature basis vectors. In connection with the aforementioned codebook parameter combinations, coefficients $\gamma$ and $\lambda$ are introduced to ascertain the number of DFT basis vectors required for the projection of the spatial domain feature basis vectors and the frequency domain feature basis vectors, respectively. The number of DFT basis vectors representing the spatial domain feature basis vectors is related to these two parameters $\gamma$ and $\lambda$, as is the number of DFT basis vectors representing the frequency domain feature basis vectors. Specifically, the number of DFT basis vectors corresponding to the spatial domain feature basis vectors is $\lceil \gamma * P/2 \rceil$ $or$ $\lfloor \gamma * P/2 \rfloor$, while the number of DFT basis vectors corresponding to the frequency domain feature basis vectors is $or$ $\lfloor \lambda * N_3 \rfloor$, wherein, $0 < \gamma \le 1$, $0 < \lambda \le 1$, this arrangement facilitates a reduction in the reporting overhead for the spatial domain and frequency domain feature basis vectors. Furthermore, the number of the different spatial domain and the frequency domain feature basis vectors may vary, with P representing the number of antenna ports and N3 denoting the number of PMI subbands corresponding to the precoding matrix. The values of $\gamma$ and $\lambda$ need not be indicated separately, as they can be determined concomitantly with the indication of the codebook parameter combinations.

FIG. 7 illustrates a flowchart of a channel measurement method in accordance with another embodiment of the present disclosure. As depicted in FIG. 7, the method 200 encompasses the following steps:

Step 210, receiving configuration information for channel measurement, wherein the configuration information comprises reference resource configuration information for the channel measurement, and the configuration information further comprises index information for at least one codebook parameter combination.

Step 220, performing channel measurement based on an indication of the configuration information.

wherein the at least one codebook parameter combination comprises a first parameter L and a second parameter $p_v$, with the first parameter representing the number of spatial feature basis vectors to be acquired, and the second parameter being used to characterize the number of frequency domain feature basis vectors to be acquired, such that the at least one codebook parameter combination, in comparison to a corresponding preset codebook parameter combination having a preset first parameter and a preset second parameter, the first parameter that is less than the preset first parameter and/or the second parameter that is less than the preset second parameter. In one embodiment, the preset codebook parameter combination codebook comprises codebook parameter combinations from the R16 eTypeII codebook.

Additional technical details regarding the channel measurement method 200 on the decoding side of the embodiment of the present disclosure can be referenced in the preceding description and will not be reiterated here.

Further Embodiment 1:

Currently, the 3GPP Release 16 and Release 17 technical specifications support the eType II codebook and the FeType II codebook. In the embodiments of this application, the Release 18 CJT codebook is introduced as a new type of codebook, enabling terminal devices to select supported codebook types from a broader range based on their capabilities. As a result of discussions surrounding existing standards, the Release 18 CJT codebook can evolve from the Release 16 eType II codebook or from the Release 17 FeType II codebook; for instance, the Release 18 CJT codebook evolving from the Release 16 eType II codebook may be designated as the eType II CJT codebook, while the Release 18 CJT codebook evolving from the Release 17 FeType II codebook may be designated as the FeType II CJT codebook. To further distinguish the capabilities of the terminals, the eType II CJT codebook and FeType II CJT codebook can be further differentiated based on codebook parameters. For instance, in the eType II CJT codebook, the value of R significantly impacts processing complexity, allowing it to be subdivided into two variants: eType II CJT R=1 and eType II CJT R=2. Similarly, for the FeType II CJT codebook, while R affects processing complexity, the value of M also plays a role. Thus, the FeType II CJT codebook can be further categorized as FeType II CJT M=1; FeType II CJT M=2, R=1; and FeType II CJT M=2, R=2.

Furthermore, to enrich the types of codebooks supported by the terminals and to provide a broader range of capability options for terminal support, the combinations of codebook parameters reported by the terminals may be represented in one or multiple forms as follows:

Codebook 1 = {Type I SP, Type I MP}
{Codebook 2, Codebook 3} =
{{eType II CJT R=1, NULL},
{eType II CJT R=2, NULL},
{FeType II CJT M =1, NULL},
{FeType II CJT M =2, R=1, NULL},
{FeType II CJT M =2, R=2, NULL},
{Type II, eType II CJT R = 1},
{Type II, eType II CJT R=2},
{Type II, FeType II CJT M =1},
{Type II, FeType II CJT M =2, R=1},
{Type II, FeType II CJT M =2, R=2},
{NCJT, eType II CJT R=1},
{NCJT, eType II CJT R=2},
{NCJT, FeType II CJT M =1},

{NCJT, FeType II PS M=2 R=1},
{NCJT, FeType II PS M=2 R=2},
{eType II CJT R=1, FeType II CJT M=1},
{eType II CJT R=1, FeType II PS M=2 R=1},
{eType II CJT R=1, FeType II PS M=2 R=2}}

In this context, SP refers to a single panel, while MP denotes a multi panel. The symbol 'e' signifies enhanced, and 'Fe' indicates further enhanced. The notation R=1 implies that each sub-band CQI corresponds to one sub-band PMI, whereas R=2 indicates that each sub-band CQI corresponds to two sub-band PMIs. The term NULL represents the absence of a value, indicating that the terminal device supports the remaining (non-NULL) codebook types within the codebook combination.

Further Embodiment 2:

As indicated in Further Embodiment 2, the Release 18 CJT codebook may evolve from the Release 16 eType II codebook or from the Release 17 FeType II codebook, based on the outcomes of discussions surrounding existing standards. For instance, the Release 18 CJT codebook derived from the Release 16 eType II codebook may be designated as the eType II CJT codebook, whereas the Release 18 CJT codebook derived from the Release 17 FeType II codebook may be designated as the FeType II CJT codebook. Moreover, the Release 18 codebook supports two distinct codebook architectures: Mode 1, which allows for independent selection of frequency domain basis vectors across different transmission reference points (TRPs), and Mode 2, which facilitates the joint selection of common spectral basis vectors among multiple TRPs. These two modalities significantly impact the complexity of terminal processing and the amount of reporting data from the terminal. Taking into account the parameters R and M, which influence terminal processing complexity as discussed in Further Embodiment 2, the enhanced Release 18 CJT codebook based on the Release 17 port selection codebook can be further categorized as follows:

FeType II M1 CJT with M=1; FeType II M1 CJT with M=2 and R=1; FeType II M1 CJT with M=2 and R=2; FeType II M2 CJT with M=1; FeType II M2 CJT with M=2 and R=1; FeType II M2 CJT with M=2 and R=2;
The R18 CJT codebook, based on the R16 port selection codebook enhancement, can be further categorized into: eType II M1 CJT R=1; eType II M1 CJT R=2; eType II M2 CJT R=1; eType II M2 CJT R=2; accordingly, based on the aforementioned representation, the codebook parameter combinations can be expressed in one or more of the following forms:

Codebook 1 = {Type I SP, Type I MP}
{Codebook 2, Codebook 3} =
{{eType II M1 CJT R=1, NULL},
{eType II M1 CJT R=2, NULL},
{FeType II M1 CJT M =1, NULL},
{FeType II M1 CJT M =2, R=1, NULL},
{FeType II M1 CJT M =2, R=2, NULL},
{eType II M2 CJT R=1, NULL},
{eType II M2 CJT R=2, NULL},
{FeType II M2 CJT M =1, NULL},
{FeType II M2 CJT M =2, R=1, NULL},
{FeType II M2 CJT M =2, R=2, NULL},
{Type II, eType II M1 CJT R=1},
{Type II, eType II M1 CJT R=2},
{Type II, FeType II M1 CJT M=1},
{Type II, FeType II M1 CJT M=2, R=1},
{Type II, FeType II M1 CJT M=2, R=2},
{Type II, eType II M2 CJT R=1},
{Type II, eType II M2 CJT R=2},
{Type II, FeType II M2 CJT M = 1},
{Type II, FeType II M2 CJT M = 2, R = 1},
{Type II, FeType II M2 CJT M = 2, R = 2},
{NCJT, eType II M1 CJT R = 1},
{NCJT, eType II M1 CJT R = 2},
{NCJT, FeType II M1 CJT M = 1},

{NCJT, FeType II M1 CJT M = 2, R = 1}
{NCJT, FeType II M1 CJT M = 2, R = 2}
{NCJT, eType II M2 CJT R = 1}
{NCJT, eType II M2 CJT R = 2}
{NCJT, FeType II M2 CJT M = 1}
{NCJT, FeType II M2 CJT M = 2, R = 1}
{NCJT, FeType II M2 CJT M = 2, R = 2}
{eType II M1 CJT R = 1, FeType II M1 CJT M = 1}
{eType II M1 CJT R = 1, FeType II M1 CJT M = 2, R = 1}
{eType II M1 CJT R = 1, FeType II M1 CJT M = 2, R = 2}
{eType II M2 CJT R = 1, FeType II M2 CJT M = 1}
{eType II M2 CJT R = 1, FeType II M2 CJT M = 2, R = 1}
{eType II M2 CJT R = 1, FeType II M2 CJT M = 2, R = 2}

In this context, SP denotes a single panel, while MP refers to a multi-panel configuration. The symbol 'e' signifies enhanced, whereas 'Fe' represents further enhanced. The parameter R = 1 indicates that each subband CQI corresponds to one subband PMI, while R = 2 denotes that each subband CQI corresponds to two subband PMIs. M1 and M2 correspond to the two codebook architectures defined in Release 18, specifically Mode 1 and Mode 2, respectively. The term NULL indicates the absence of a value, signifying that the terminal device supports the remaining (non-NULL) codebook types within the codebook combination.

Further Embodiment 3:

As delineated in Further Implementation Example 2, the outcomes discussed in accordance with the existing standards suggest that the R18 CJT codebook may evolve from the R16 eTypeII codebook or from the R17 FeTypeII codebook. For instance, the R18 CJT codebook derived from the R16 eTypeII codebook can be designated as the eType II CJT codebook, while the R18 CJT codebook evolved from the R17 FeTypeII codebook may be referred to as the FeTypeII CJT codebook. Given the complexity of the processing undertaken by the terminal and the relevance of whether the terminal selects the final collaborative Transmission Reception Points (TRPs) based on the maximum number N_TRP as indicated by the base station, it is essential to differentiate the complexity of terminal processing. This differentiation can be made based on the relationship between the number of final collaborative TRPs and the maximum number of collaborative TRPs indicated by the base station, such as for N = N_TRP and N< N_TRP. Furthermore, by integrating the parameters R and M that influence the codebook processing complexity from R16 and R17, a more nuanced classification of the codebook types can be achieved. In summary, the R18 CJT codebook, which is enhanced by the port selection codebook from R17, can be further categorized as follows:

FeType II CJT for N = N_TRP, M = 1; FeType II CJT for N = N_TRP, M = 2, R = 1; FeType II CJT for N = N_TRP, M = 2, R = 2; FeType II CJT for N < N_TRP, M = 1; FeType II CJT for N< N_TRP, M = 2, R = 1; FeType II CJT for N < N_TRP, M = 2, R = 2;

The R18 CJT codebook, enhanced based on the R16 port selection codebook, can be further subdivided into:
eType II CJT with N=N_TRP and R=1; eType II CJT with N=N_TRP and R=2; eType II CJT with N<N_TRP and R=1; eType II CJT with N<N_TRP and R=2. Therefore, based on the aforementioned representations, the combinations of codebook parameters can be expressed in one or more of the following forms:

Codebook 1 = {Type I SP, Type I MP}
{Codebook 2, Codebook 3} =
{{eType II CJTN=N_TRP, R=1, NULL},
{eType II CJT N=N_TRP, R=2, NULL},
{FeType II CJT N=N_TRP, M=1, NULL},
{FeType II CJT N=N_TRP, M=2, R=1, NULL},
{FeType II CJT N=N_TRP, M=2, R=2, NULL},
{eType II CJT N<N_TRP, R=1, NULL},
{eType II CJT N<N_TRP, R=2, NULL},
{FeType II CJT N<N_TRP, M =1, NULL},
{FeType II CJT N<N_TRP, M =2, R=1, NULL},
{FeType II CJT N<N_TRP, M =2, R=2, NULL},
{Type II, eType II CJT N=N_TRP, R=1},
{Type II, eType II CJT N=N_TRP, R=2},

{Type II, FeType II CJT N=N_TRP, M=1},
{Type II, FeType II CJT N=N_TRP, M=2, R=1},
{Type II, FeType II CJT N=N_TRP, M=2, R=2},
{Type II, eType II CJT N<N_TRP, R=1},
{Type II, eType II CJT N<N_TRP, R=2},
{Type II, FeType II CJT N<N_TRP, M =1},
{Type II, FeType II CJT N<N_TRP, M =2, R=1},
{Type II, FeType II CJT N<N_TRP, M =2, R=2},
{NCJT, eType II CJT N=N_TRP, R=1},
{NCJT, eType II CJT N=N_TRP, R=2},
{NCJT, FeType II CJT N=N_TRP, M=1},
{NCJT, FeType II CJT N=N_TRP, M=2, R=1},
{NCJT, FeType II CJT N=N_TRP, M=2, R=2},
{NCJT, eType II CJT N<N_TRP, R=1},
{NCJT, eType II CJT N<N_TRP, R=2},
{NCJT, FeType II CJT N<N_TRP, M=1},
{NCJT, FeType II CJT N<N_TRP, M=2, R=1},
{NCJT, FeType II CJT N<N_TRP, M=2, R=2},
{eType II CJT N=N_TRP, R=1, FeType II CJT N=N_TRP, M=1},
{eType II CJT N=N_TRP, R=1, FeType II CJT N=N_TRP, M=2, R=1},
{eType II CJT N=N_TRP, R=1, FeType II CJT N=N_TRP, M=2, R=2},
{eType II CJT N < N_TRP, R = 1, FeType II CJT N < N_TRP, M = 1},
{eType II CJT N < N_TRP, R = 1, FeType II CJT N < N_TRP, M = 2, R = 1},
{eType II CJT N < N_TRP, R = 1, FeType II CJT N < N_TRP, M = 2, R = 2}}

Further Embodiment 4:

Based on the aforementioned implementation examples, and taking into account the complexity of terminal processing as well as the selection of the final collaborative TRP being contingent upon the maximum number of collaborative TRPs (N_TRP) indicated by the base station, it is essential to distinguish the complexity of terminal processing. This can be achieved by analyzing the relationship between the number of final collaborative TRPs and the maximum number of collaborative TRPs indicated by the base station, such as when N=N_TRP and N <N_TRP. Furthermore, the complexity of terminal processing is also related to the number of NL; a greater NL implies that the terminal must select an appropriate number of spatial basis vectors or ports from multiple candidate spatial basis vectors or ports, thereby influencing the complexity of terminal processing. In summary, the R18 CJT codebook, enhanced based on the R17 port selection codebook, can be further categorized as follows:

FeType II CJT where N=N_TRP and NL=1; FeType II CJT where N=N_TRP and NL> 1; FeType II CJT where N<N_TRP and NL=1; FeType II CJT where N<N_TRP and NL> 1;

The R18 CJT codebook, which is based on the R16 port selection codebook enhancement, can be further categorized as follows:

eType II CJT with N=N_TRP, NL=1; eType II CJT with N=N_TRP, NL>1; eType II CJT with N=N_TRP, NL=1; eType II CJT with N<N_TRP, NL>1. Accordingly, based on the aforementioned representations, the codebook parameter combinations can be expressed in one or multiple formats as follows:

Codebook 1 = {Type I SP, Type I MP}
{Codebook 2, Codebook 3} =
{{eType II CJT N=N_TRP, NL=1, NULL},
{eType II CJT N=N_TRP, NL>1, NULL},
{eType II CJT N<N_TRP, NL=1, NULL},
{eType II CJT N<N_TRP, NL>1, NULL},
{FeType II CJT N=N_TRP, NL=1, NULL},
{FeType II CJT N=N_TRP, NL>1, NULL},
{FeType II CJT N<N_TRP, NL=1, NULL},
{FeType II CJT N<N_TRP, NL>1, NULL}
{Type II, eType II CJT N=N_TRP, NL=1},
{Type II, eType II CJT N=N_TRP, NL<1},
{Type II, eType II CJT N<N_TRP, NL=1},

{Type II, eType II CJT N<N_TRP, NL<1},
{Type II, FeType II CJT N=N_TRP, NL=1},
{Type II, FeType II CJT N=N_TRP, NL>1},
{Type II, FeType II CJT N<N_TRP, NL=1},
{Type II, FeType II CJT N<N_TRP, NL>1},
{NCJT, eType II CJT N=N_TRP, NL=1},
{NCJT, eType II CJT where N=N_TRP and NL< 1},
{NCJT, eType II CJT where N<N_TRP and NL=1},
{NCJT, eType II CJT where N<N_TRP and NL < 1},
{NCJT, FeType II CJT where N=N_TRP and NL=1},
{NCJT, FeType II CJT where N=N_TRP and NL>1},
{NCJT, FeType II CJT where N<N_TRP and NL=1},
{NCJT, FeType II CJT where N<N_TRP and NL>1},
{eType II CJT where N=N_TRP and NL=1, FeType II CJT where N=N_TRP and NL=1},
{eType II CJT where N=N_TRP and NL<1, FeType II CJT where N=N_TRP and NL>1},
{eType II CJT where N<N_TRP and NL=1, FeType II CJT where N<N_TRP and NL=1},
{eType II CJT where N<N_TRP and NL< 1, FeType II CJT where N<N_TRP and NL>1}

Further Embodiment 5:

Based on Further Implementation Example 4, it should be noted that the complexity of terminal processing is also contingent upon the values of the codebook parameters R and M. In summary, the codebook enhancement for R18 CJT, derived from the R17 port selection codebook, can be further categorized as follows:

FeType II CJT where N = N_TRP, NL = 1, and M = 1;
FeType II CJT where N = N_TRP, NL = 1, M = 2, and R = 1;
FeType II CJT where N = N_TRP, NL = 1, M = 2, and R = 2;
FeType II CJT where N = N_TRP, NL > 1, and M = 1;
FeType II CJT where N = N_TRP, NL > 1, M = 2, and R = 1;
FeType II CJT where N = N_TRP, NL > 1, M = 2, and R = 2;
FeType II CJT where N < N_TRP, NL = 1, and M = 1;
FeType II CJT where N < N_TRP, NL = 1, M = 2, and R = 1;
FeType II CJT where N < N_TRP, NL = 1, M = 2, and R = 2;
FeType II CJT where N < N_TRP, NL > 1, and M = 1;
FeType II CJT where N < N_TRP, NL > 1, M = 2, and R = 1;
FeType II CJT where N < N_TRP, NL > 1, M = 2, and R = 2;

The R18 CJT codebook, which is enhanced by the R16 port selection codebook, can be further delineated into:

eType II CJT with parameters N=N_TRP, NL=1, and R=1;
eType II CJT with parameters N=N_TRP, NL=1, and R=2;
eType II CJT with parameters N=N_TRP, NL>1, and R=1;
eType II CJT with parameters N=N_TRP, NL>1, and R=2;
eType II CJT with parameters N<N_TRP, NL=1, and R=1;
eType II CJT with parameters N<N_TRP, NL=1, and R=2;
eType II CJT with parameters N<N_TRP, NL>1, and R=1;
eType II CJT with parameters N<N_TRP, NL>1, and R=2;

Accordingly, based on the aforementioned representation, the parameter combinations of the codebook can be expressed in one or more of the following forms:

Codebook 1 = {Type I SP, Type I MP}
{Codebook 2, Codebook 3} =
{{eType II CJT N=N_TRP, NL=1, R=1, NULL},
{eType II CJT where N=N_TRP, NL=1, R=2, NULL}
{eType II CJT where N<N_TRP, NL=1, R=1, NULL}
{eType II CJT where N<N_TRP, NL=1, R=2, NULL}
{eType II CJT where N=N_TRP, NL> 1, R=1, NULL}

{eType II CJT where N=N_TRP, NL> 1, R=2, NULL}
{eType II CJT where N<N_TRP, NL>1, R=1, NULL}
{eType II CJT where N<N_TRP, NL>1, R=2, NULL}
{FeType II CJT where N=N_TRP, NL=1, M=1, NULL}
{FeType II CJT where N =N_TRP, NL>1, M=1, NULL}
{FeType II CJT where N<N_TRP, NL=1, M=1, NULL}
{FeType II CJT where N<N_TRP, NL>1, M=1, NULL}
{FeType II CJT where N=N_TRP, NL=1, M=2, R=1, NULL}
{FeType II CJT where N=N_TRP, NL>1, M=2, R==1, NULL}
{FeType II CJT where N<N_TRP, NL=1, M=2, R=1, NULL}
{FeType II CJT where N<N_TRP, NL>1, M=2, R=1, NULL}
{FeType II CJT where N=N_TRP, NL=1, M=2, R=2, NULL}
{FeType II CJT where N=N_TRP, NL>1, M=2, R= 2, NULL}
{FeType II CJT where N<N_TRP, NL=1, M=2, R=2, NULL}
{FeType II CJT where N<N_TRP, NL>1, M=2, R=2, NULL}
{Type II, eType II CJT where N=N_TRP, NL=1, R=1}
{Type II, eType II CJT where N<N_TRP, NL=1, and R=1 }
{Type II, eType II CJT where N=N_TRP, NL>1, and R=1}
{Type II, eType II CJT where N<N_TRP, NL> 1, and R=1}
{Type II, FeType II CJT where N=N_TRP, NL=1, and M=1}
{Type II, FeType II CJT where N=N_TRP, NL>1, and M=1}
{Type II, FeType II CJT where N<N_TRP, NL=1, and M=1}
{Type II, FeType II CJT where N<N_TRP, NL>1, and M=1}
{Type II, FeType II CJT where N=N_TRP, NL=1, M=2, and R=1}
{Type II, FeType II CJT where N=N_TRP, NL>1, M=2, and R=1}
{Type II, FeType II CJT where N<N_TRP, NL=1, M=2, and R=1}
{Type II, FeType II CJT where N<N_TRP, NL>1, M=2, and R=1}
{NCJT, eType II CJT where N=N_TRP, NL=1, and R=1}
{NCJT, eType II CJT where N<N_TRP, NL=1, and R=1}
{NCJT, eType II CJT where N=N_TRP, NL> 1, R=1}
{NCJT, eType II CJT where N<N_TRP, NL> 1, R=1}
{NCJT, FeType II CJT where N=N_TRP, NL=1, and M=1}
{NCJT, FeType II CJT where N=N_TRP, NL>1, and M=1}
{NCJT, FeType II CJT where N<N_TRP, NL=1, and M=1}
{NCJT, FeType II CJT where N<N_TRP, NL> 1, and M=1}
{NCJT, FeType II CJT where N=N_TRP, NL=1, M=2, and R=1}
{NCJT, FeType II CJT where N=N_TRP, NL> 1, M=2, and R=1}
{NCJT, FeType II CJT where N<N_TRP, NL=1, M=2, and R=1}
{NCJT, FeType II CJT where N<N_TRP, NL>1, M=2, and R=1}
{eType II CJT where N=N_TRP, NL=1, R=1; FeType II CJT where N=N_TRP, NL =1, and M=1}
{eType II CJT where N=N_TRP, NL> 1, R=1; FeType II CJT where N=N_TRP, NL> 1, and M=1}
{eType II CJT where N<N_TRP, NL=1, R=1; FeType II CJT where N<N_TRP, NL=1, and M=1}
{eType II CJT where N<N_TRP, NL> 1, and R=1; FeType II CJT where N<TRP, NL> 1, and M=1}
{eType II CJT where N=N_TRP, NL=1, and R=1; FeType II CJT where N=N_TRP, NL=1, M=2, and R=1}
{eType II CJT where N=N_TRP, NL> 1, and R=1; FeType II CJT where N=N_TRP, NL> 1, M=2, and R =1}
{eType II CJT where N<N_TRP, NL=1, and R=1; FeType II CJT where N<N_TRP, NL=1, M=2, and R =1}
{eType II CJT where N<N_TRP, NL> 1, and R=1; FeType II CJT where N<N_TRP, NL>1, M=2, and R=1}

Further Embodiment 6:

As indicated in the aforementioned implementation examples, the R18 CJT codebook, as discussed in accordance with the existing standards, can evolve from the eType II codebook of R16 or from the FeType II codebook of R17. For instance, the R18 CJT codebook evolved from the R16 eType II codebook may be designated as the eType II CJT codebook, while the R18 CJT codebook evolved from the R17 FeType II codebook may be referred to as the FeType II CJT codebook. In consideration of the necessity to select N TRPs from the maximum number of cooperative TRPs, where N≤N_TRP, the selection of N_TRP significantly influences the complexity of terminal processing. Furthermore, to better differentiate the processing capabilities of terminals, this embodiment categorizes terminals into two groups: one group where N_TRP ≤ 2 and another where N_TRP > 2. Consequently, the R18 CJT codebook, enhanced through the port selection codebook of R17, can be further classified into:

FeType II CJT where N_TRP ≤ 2, M = 1; FeType II CJT where N_TRP ≤ 2, M = 2, R = 1; FeType II CJT where N_TRP ≤ 2, M = 2, R = 2; FeType II CJT where N_TRP > 2, M = 1; FeType II CJT where N_TRP > 2, M = 2, R = 1; FeType II CJT where N_TRP > 2, M = 2, R = 2.

The R18 CJT codebook, which is based on the R16 port selection codebook enhancement, can be further categorized into:

eType II CJT N_TRP>2, R=1; eType II CJT N_TRP>2, R=2; eType II CJT N_TRP≤2, R=1; eType II CJT N_TRP≤2, R=2; consequently, based on the aforementioned representation, the codebook parameter combinations may be expressed in one or more of the following forms:

Codebook 1 = {Type I SP, Type I MP}
{Codebook 2, Codebook 3} =
{{eType II CJT N_TRP≤2, R=1, NULL},
{eType II CJT N_TRP>2, R=1, NULL},
{eType II CJT N_TRP≤2, R=2, NULL},
{eType II CJT N_TRP>2, R=2, NULL},
{FeType II CJT N_TRP≤2, M=1, NULL},
{FeType II CJT N_TRP≤2, M=2, R=1, NULL},
{FeType II CJT N_TRP≤2, M=2, R=2, NULL},
{FeType II CJT N_TRP>2, M=1, NULL},
{FeType II CJT N_TRP>2, M=2, R=1, NULL},
{FeType II CJT N_TRP>2, M=2, R=2, NULL},
{Type II, eType II CJT N_TRP≤2, R=1},
{Type II, eType II CJT N_TRP>2, R=1 },
{Type II, FeType II CJT N_TRP≤2, M=1},
{Type II, FeType II CJT N_TRP≤2, M=2, R=1},
{Type II, FeType II CJT N_TRP>2, M=1},
{Type II, FeType II CJT N_TRP>2, M=2, R=1},
{NCJT, eType II CJT N_TRP≤2, R=1},
{NCJT, eType II CJTN_TRP>2, R=1},
{NCJT, FeType II CJT N_TRP≤2, M=1},
{NCJT, FeType II CJT N_TRP≤2, M=2, R=1},
{NCJT, FeType II CJT N_TRP>2, M=1},
{NCJT, FeType II CJT N_TRP>2, M=2, R=1},
{eType II CJT N_TRP≤2, R=1, FeType II CJT N_TRP≤2, M=1},
{eType II CJT N_TRP≤2, R=1, FeType II CJT N_TRP≤2, M=2, R=1},
{eType II CJT N_TRP>2, R=1, FeType II CJT N_TRP>2, M=1},
{eType II CJT where N_TRP > 2, R = 1; FeType II CJT where N_TRP > 2, M = 2, R = 1},

Further Embodiment 7:

Based on Further Implementation Example 4, it should be noted that the complexity of terminal processing is also influenced by the chosen values of the codebook parameters R and M. In summary, the R18 CJT codebook, which is an enhancement of the R17 port selection codebook, can be further categorized as follows:

FeType II CJT with N_TRP ≤ 2, NL = 1, and M = 1;
FeType II CJT with N_TRP ≤ 2, NL = 1, M = 2, and R = 1;
FeType II CJT with N_TRP ≤ 2, NL = 1, M = 2, and R = 2;
FeType II CJT with N_TRP ≤ 2, NL > 1, and M = 1;
FeType II CJT with N_TRP ≤ 2, NL > 1, M = 2, and R = 1;
FeType II CJT with N_TRP ≤ 2, NL > 1, M = 2, and R = 2;
FeType II CJT with N_TRP > 2, NL = 1, and M = 1;
FeType II CJT with N_TRP > 2, NL = 1, M = 2, and R = 1;
FeType II CJT with N_TRP > 2, NL = 1, M = 2, and R = 2;
FeType II CJT with N_TRP > 2, NL > 1, and M = 1;
FeType II CJT with N_TRP > 2, NL > 1, M = 2, and R = 1;
FeType II CJT with N_TRP > 2, NL > 1, M = 2, and R = 2;

The R18 CJT codebook, which is enhanced based on the R16 port selection codebook, can be further categorized into:

eType II CJT with $N\_TRP \leq 2$, NL = 1, R = 1;
eType II CJT with $N\_TRP \leq 2$, NL = 1, R = 2;
eType II CJT with $N\_TRP \leq 2$, NL > 1, R = 1;
eType II CJT with $N\_TRP \leq 2$, NL > 1, R = 2;
eType II CJT with $N\_TRP > 2$, NL = 1, R = 1;
eType II CJT with $N\_TRP > 2$, NL = 1, R = 2;
eType II CJT with $N\_TRP > 2$, NL > 1, R = 1;
eType II CJT with $N\_TRP > 2$, NL > 1, R = 2;

Accordingly, based on the aforementioned notation, the codebook parameter combinations may be articulated in one or multiple forms as follows:

Codebook 1 = {Type I SP, Type I MP}
{Codebook 2, Codebook 3} =
{{eType II CJT $N\_TRP \leq 2$, NL = 1, R = 1, NULL},
{eType II CJT $N\_TRP \leq 2$, NL = 1, R = 2, NULL},
{eType II CJT $N\_TRP > 2$, NL = 1, R = 1, NULL},
{eType II CJT $N\_TRP > 2$, NL = 1, R = 2, NULL},
{eType II CJT $N\_TRP \leq 2$, NL > 1, R = 1, NULL},
{eType II CJT $N\_TRP \leq 2$, NL > 1, R = 2, NULL},
{eType II CJT $N\_TRP > 2$, NL > 1, R = 1, NULL},
{eType II CJT $N\_TRP > 2$, NL > 1, R = 2, NULL},
{FeType II CJT $N\_TRP \leq 2$, NL = 1, M = 1, NULL},
{FeType II CJT $N\_TRP \leq 2$, NL > 1, M = 1, NULL},
{FeType II CJT $N\_TRP > 2$, NL = 1, M = 1, NULL},
{FeType II CJT $N\_TRP > 2$, NL > 1, M = 1, NULL}
{FeType II CJT where $N\_TRP \leq 2$, NL = 1, M = 2, R = 1, NULL},
{FeType II CJT where $N\_TRP \leq 2$, NL > 1, M = 2, R = 1, NULL},
{FeType II CJT where $N\_TRP > 2$, NL = 1, M = 2, R = 1, NULL},
{FeType II CJT where $N\_TRP > 2$, NL > 1, M = 2, R = 1, NULL}
{FeType II CJT where $N\_TRP \leq 2$, NL = 1, M = 2, R = 2, NULL}
{FeType II CJT where $N\_TRP \leq 2$, NL > 1, M = 2, R = 2, NULL}
{FeType II CJT where $N\_TRP > 2$, NL = 1, M = 2, R = 2, NULL}
{FeType II CJT where $N\_TRP > 2$, NL > 1, M = 2, R = 2, NULL}
{Type II, eType II CJT where $N\_TRP \leq 2$, NL = 1, R = 1}
{Type II, eType II CJT where $N\_TRP > 2$, NL = 1, R = 1}
{Type II, eType II CJT where $N\_TRP \leq 2$, NL > 1, R = 1}
{Type II, eType II CJT where $N\_TRP > 2$, NL > 1, R = 1}
{Type II, FeType II CJT where $N\_TRP \leq 2$, NL = 1, M = 1}
{Type II, FeType II CJT where $N\_TRP \leq 2$, NL > 1, M = 1}
{Type II, FeType II CJT where $N\_TRP > 2$, NL = 1, M = 1}
{Type II, FeType II CJT where $N\_TRP > 2$, NL > 1, M = 1}
{Type II, FeType II CJT where $N\_TRP \leq 2$, NL = 1, M = 2, R = 1}
{Type II, FeType II CJT where $N\_TRP \leq 2$, NL > 1, M = 2, R = 1}
{Type II, FeType II CJT where $N\_TRP > 2$, NL= 1, M = 2, R = 1}
{Type II, FeType II CJT where $N\_TRP > 2$, NL > 1, M = 2, R = 1}
{NCJT, eType II CJT wherein $N\_TRP \leq 2$, NL = 1, R = 1}
{NCJT, eType II CJT wherein $N\_TRP > 2$, NL = 1, R = 1}
{NCJT, eType II CJT wherein $N\_TRP \leq 2$, NL > 1, R = 1}
{NCJT, eType II CJT wherein $N\_TRP > 2$, NL > 1, R = 1}
{NCJT, FeType II CJT wherein $N\_TRP \leq 2$, NL = 1, M = 1}
{NCJT, FeType II CJT wherein $N\_TRP \leq 2$, NL > 1, M = 1}
{NCJT, FeType II CJT wherein $N\_TRP > 2$, NL = 1, M = 1}
{NCJT, FeType II CJT wherein $N\_TRP > 2$, NL > 1, M = 1}
{NCJT, FeType II CJT wherein $N\_TRP \leq 2$, NL = 1, M = 2, R = 1}

{NCJT, FeType II CJT wherein N_TRP $\leq$ 2, NL > 1, M = 2, R = 1}
{NCJT, FeType II CJT wherein N_TRP > 2, NL = 1, M = 2, R = 1}
{NCJT, FeType II CJT wherein N_TRP > 2, NL > 1, M = 2, R = 1}
{eType II CJT where N_TRP $\leq$ 2, NL = 1, R = 1, FeType II CJT where N_TRP $\leq$ 2, NL = 1, M = 1},
{eType II CJT where N_TRP $\leq$ 2, NL > 1, R = 1, FeType II CJT where N_TRP $\leq$ 2, NL > 1, M = 1},
{eType II CJT where N_TRP > 2, NL = 1, R = 1, FeType II CJT where N_TRP > 2, NL = 1, M = 1},
{eType II CJT where N_TRP > 2, NL > 1, R = 1, FeType II CJT where N_TRP > 2, NL > 1, M = 1}
{eType II CJT where N_TRP $\leq$ 2, NL = 1, R = 1, FeType II CJT where N_TRP $\leq$ 2, NL = 1, M = 2, R = 1}
{eType II CJT where N_TRP $\leq$ 2, NL > 1, R = 1, FeType II CJT where N_TRP $\leq$ 2, NL > 1, M = 2, R = 1}
{eType II CJT where N_TRP > 2, NL = 1, R = 1, FeType II CJT where N_TRP > 2, NL = 1, M = 2, R = 1}
{eType II CJT where N_TRP > 2, NL > 1, R = 1, FeType II CJT where N_TRP > 2, NL > 1, M = 2, R = 1}

Further Embodiment 8:

In regard to the aforementioned Further Implementation Examples 1 to 7, considering that the CJT codebook is predominantly tailored for multi-TRP scenarios, Codebook 1 within the codebook combination may also encompass the NCJT codebook or the NCJT + Type 1 SP (for sTRP) codebook. Consequently, {codebook2, codebook3} would correspond to the codebook combination forms described in Further Implementation Examples 1 to 7. Should the codebook combination in Further Implementation Examples 1 to 7 already incorporate the NCJT or NCJT + Type 1 SP (for sTRP) codebook combination, the corresponding codebook combination would no longer be necessitated.

Further Embodiment 9:

Considering that the evolution of the R18 CJT codebook is based on the existing R16 eType II and R17 Fetype II codebooks, and that the capability requirements for certain terminals concerning the CJT codebooks for these two evolution schemes are identical-such as whether the terminal supports rank 3 or 4, whether the terminal supports dynamic TRP selection, whether the terminal is capable of selecting and reporting a spatial basis set from multiple candidate spatial basis sets, and whether the number of CSI-RS ports for participating collaborative TRPs supported by the terminal exceeds 32-therefore, concerning the aforementioned capabilities that the terminal might report, current standards necessitate that terminals report separately for the R16 eType II CJT codebook and the R17 Fetype II CJT codebook. However, the support of these features by the terminal may be largely independent of whether the CJT codebook is based on the evolution of the R16 eType II or the R17 Fetype II codebook. Thus, we propose that for the following features, terminals should report in the capability items/feature groups without distinguishing which codebook evolution the CJT codebook is based upon:

(1) The CJT codebook supports rank 3 and 4;
(2) The CJT codebook supports dynamic TRP selection;
(3) The CJT codebook enables the selection of a spatial basis set from a multitude of candidate spatial basis sets;
(4) The CJT codebook supports a total number of CSI-RS ports for participating collaborative TRPs that exceeds 32.

This implies that when the terminal supports the CJT codebook, the reporting of the aforementioned capability items/feature groups does not differentiate based on the evolution of the CJT codebook. It necessitates the reporting of only a single capability item/feature group. For instance, under the current method of separate reporting, the terminal would require 8 fields to report the aforementioned capability items/feature groups. However, by not distinguishing which evolution of the CJT codebook is being utilized, only 4 fields are actually required, thereby potentially reducing the reporting overhead for the terminal.

The embodiment of the present disclosure further provides a terminal, which comprises a memory and a processor, wherein a computer program is stored in the memory, and the execution of said computer program by the processor implements the steps of any method embodiment described above.

The embodiment of the present disclosure also provides a base station, which comprises a memory and a processor, wherein a computer program is stored in the memory, and the execution of said computer program by the processor implements the steps of any method embodiment described above.

The present disclosure further provides a non-volatile storage medium, on which a computer program is stored, and the execution of said computer program by a computer implements the steps of any method embodiment described above.

In the embodiments of the terminal, base station, and storage medium provided by the present disclosure, all technical features of any of the aforementioned method embodiments may be comprised. The description, along with the elaboration and interpretation of the content, is fundamentally consistent with the various embodiments of the aforementioned methods and will not be reiterated here.

The embodiments of the present disclosure also provide a computer program product, which comprises computer program code. When the computer program code is executed on a computer, it enables the computer to perform the methods as outlined in the various potential embodiments described above.

The embodiments of the present disclosure also provide a chip, which comprises a memory and a processor. The memory is utilized for storing a computer program, while the processor is responsible for retrieving and executing the computer program from the memory, thereby enabling devices equipped with the chip to carry out the methods as delineated in the various potential embodiments aforementioned.

It is to be understood that the aforementioned scenario is merely illustrative and does not impose any limitations on the application contexts of the technical solutions provided by the embodiments of the present disclosure. The technical solutions of the present disclosure can also be applied to other contexts. For instance, it is recognized by those skilled in the art that with the evolution of system architectures and the emergence of new service scenarios, the technical solutions provided by the embodiments of the present disclosure are equally applicable to analogous technical challenges.

The above enumeration of the embodiments of the present disclosure is solely for descriptive purposes and does not imply any superiority or inferiority among the embodiments.

The steps in the method of the embodiments of the present disclosure may be reordered, combined, or omitted as required by practical circumstances.

The units in the apparatus of the embodiments of the present disclosure may be combined, subdivided, or omitted as dictated by practical requirements.

In the present disclosure, for identical or analogous terminological concepts, technical solutions, and/or application scenarios, a detailed description is generally provided only upon their initial occurrence. For subsequent mentions, in the interest of brevity, such terms are typically not reiterated. When comprehending the technical solutions of the present disclosure and other related content, one may refer to the earlier detailed descriptions concerning the same or similar terminological concepts, technical solutions, and/or application scenarios that are not elaborated upon later.

In the present disclosure, the descriptions of each embodiment are tailored to emphasize different aspects. Any elements not thoroughly detailed or documented in a particular embodiment may be referenced in the relevant descriptions of other embodiments.

The technical features of the technical solution of the present disclosure may be combined in any arbitrary manner. For conciseness of description, not all possible combinations of the various technical features in the aforementioned embodiments are detailed herein; however, any combination of these technical features that does not present contradictions should be considered to fall within the scope of the present disclosure as documented.

Through the description of the aforementioned embodiments, those skilled in the art can clearly understand that the method of the described embodiments can be implemented using a combination of software and necessary general-purpose hardware platforms. Naturally, it can also be realized through hardware; however, in many instances, the former represents a superior implementation approach. Based on this understanding, the technical solution of the present disclosure, or more specifically, the portion that contributes to the existing technology, can be embodied in the form of a software product. This computer software product is stored on a storage medium such as ROM/RAM, magnetic disk, or optical disc, and comprises several instructions that enable a terminal device (which may be a mobile phone, computer, server, controlled terminal, or network device, among others) to execute the methods of each embodiment of the present disclosure.

In the embodiments described above, the system can be implemented in whole or in part through software, hardware, firmware, or any combination thereof. When implemented via software, the system may be realized as a computer program product, which comprises one or more computer instructions. When these instructions are loaded and executed on a computer, they partially or fully execute the processes or functions of the embodiments of the present disclosure. The computer may be a general-purpose computer, a dedicated computer, a computer network, or other programmable device. Computer instructions can be stored on a storage medium or transmitted between storage media. For example, instructions may be transferred from one website, computer, server, or data center to another via wired (e.g., coaxial cable, fiber optic, digital subscriber line) or wireless (e.g., infrared, radio frequency, microwave) means. Storage media may include any accessible medium or integrated data storage devices such as servers or data centers containing multiple media. Available media may consist of magnetic media (e.g., floppy disks, storage disks, magnetic tapes), optical media (e.g., DVDs), or semiconductor media (e.g., Solid State Disks (SSDs)).

The aforementioned description merely represents the embodiments of the present disclosure and does not serve to limit the patent scope of the invention. Any equivalently structured or procedurally equivalent transformations derived from the content of the specification and accompanying drawings of the present disclosure, or any direct or indirect application thereof in other related technical fields, shall likewise fall within the protective scope of the patent of the present disclosure.

**Claims**

1. A Channel measurement method, executed by a terminal, comprising:

receiving configuration information for channel measurement, wherein the configuration information comprises a number of indicated spatial domain basis vectors and a number of indicated frequency domain feature vectors;
receiving a reference signal for channel measurement;
measuring a channel based on the reference signal, and determining channel state information based on the number of indicated spatial domain feature basis vectors and the number of indicated frequency domain feature basis vectors; and
reporting the channel state information to the base station;
wherein the channel state information comprises a precoding matrix indicator (PMI), the PMI comprises non-zero coefficients from a coefficient matrix reported by the terminal and a number of non-zero coefficients corresponding to at least one layer and/or at least one polarization direction.

2. The channel measurement method of claim 1, wherein the PMI is used to enable the base station to construct a precoding matrix and to perform precoding of data through the precoding matrix, wherein coefficients obtained by projecting the precoding matrix onto a spatial domain basis matrix and a frequency domain basis matrix constitute the coefficient matrix, and the coefficients in the coefficient matrix comprise the non-zero coefficients.

3. The channel measurement method of claim 1, wherein the configuration information comprises a parameter combination index, such that for the parameter combination index, the number of indicated spatial domain feature basis vectors is less than or equal to a corresponding preset number of spatial domain feature basis vectors.

4. The channel measurement method of claim 1, wherein the number of indicated spatial domain feature basis vectors is less than or equal to three.

5. The channel measurement method of claim 1, wherein the number of indicated spatial domain feature basis vectors differs for different layers.

6. The channel measurement method of claim 5, wherein the number of indicated spatial domain feature basis vectors is the same for a first layer and a second layer; and the number of indicated spatial domain feature basis vectors is the same for a third layer and a fourth layer.

7. The channel measurement method of claim 1, wherein the configuration information comprises a parameter combination index, such that for the parameter combination index, the number of indicated frequency domain feature basis vectors is less than or equal to a corresponding preset number of frequency domain feature basis vectors.

8. The channel measurement method of claim 1, wherein the number of indicated frequency domain feature basis vectors is **characterized by** a number of PMI sub-bands corresponding to the precoding matrix, a number of PMI sub-bands contained in a channel quality indicator (CQI) sub-bands, and a coefficient selected for frequency domain basis vector in a codebook parameter combination.

9. The channel measurement method of claim 8, wherein, for a first layer or a second layer, the coefficient selected for frequency domain basis vectors in the codebook parameter combination comprises $\frac{1}{8}$ or $\frac{3}{8}$; and/or for a third layer or a fourth layer, the coefficient selected for frequency domain basis vectors in the codebook parameter combination comprises $\frac{3}{8}$ or $\frac{1}{16}$.

10. The channel measurement method of claim 8, wherein, for a first layer or a second layer, the coefficients selected for frequency domain basis vectors in the codebook parameter combination comprise $\frac{1}{8}$ or $\frac{1}{16}$; and/or for a third layer or a fourth layer, the coefficients selected for frequency domain basis vectors in the codebook parameter combination comprise $\frac{3}{16}$ or $\frac{1}{16}$.

11. The channel measurement method of claim 1, wherein the configuration information further comprises a maximum number or a control factor $\beta$ for the number of the non-zero coefficients, wherein a value of the control factor $\beta$ ensures that for the case of reporting the maximum number of the non-zero coefficients for a single layer, there are non-zero coefficients selected for reporting in every column and every row of the coefficient matrix.

12. The channel measurement method of claim 1, wherein the number of the non-zero coefficients is **characterized by** a binary representation of the maximum number of the non-zero coefficients, and a number of bits used to represent the number of the non-zero coefficients is identical to a number of bits used to represent the maximum number of the non-zero coefficients.

13. The channel measurement method of claim 12, wherein the number of bits representing the maximum number of the non-zero coefficients is obtained by taking a ceiling of a logarithm to a base two of the maximum number of the non-zero coefficients.

14. The channel measurement method of claim 1, wherein the number of non-zero coefficients reported by the terminal for each layer is the same, the number of non-zero coefficients for a single layer is reported by the terminal.

15. The channel measurement method of claim 1, wherein the number of non-zero coefficients reported by the terminal for a first layer and a second layer is the same, and/or the number of non-zero coefficients reported by the terminal for a third layer and a fourth layer is the same.

16. The channel measurement method of claim 15, wherein the number of non-zero coefficients reported by the terminal for the first layer and the second layer is the same, and for the number of non-zero coefficients for the first layer and the second layer, the terminal reports only the number of non-zero coefficients for one layer; and/or the number of non-zero coefficients reported by the terminal for the third layer and the fourth layer is the same, and for the number of non-zero coefficients for the third layer and the fourth layer, the terminal reports only the number of non-zero coefficients for one layer.

17. The channel measurement method of any one of claims 1, 14 to 16, wherein the number of non-zero coefficients reported by the terminal is identical for each polarization direction, and the terminal reports only the number of the non-zero coefficients for a single polarization direction.

18. The channel measurement method of claim 1, wherein the non-zero coefficients reported by the terminal are selected from elements of the coefficient matrix, and a sum of row indexes and column indexes of the selected reported elements is less than a sum of row indexes and column indexes of unselected elements; if a sum of a row index and a column index of two elements is the same, preference is given to selecting an element with a smaller row index or, alternatively, a smaller column index among the two elements.

19. The channel measurement method of claim 1, wherein the non-zero coefficients reported by the terminal to the base station are selected from elements of the coefficient matrix, with a preference for selecting elements of the coefficient matrix in ascending order either by row or by column for reporting.

20. The channel measurement method of claim 1, wherein, when a number of the non-zero coefficients to be reported by the terminal=a maximum number of the non-zero coefficients that the terminal is capable of reporting, the terminal gives up reporting the number of the non-zero coefficients.

21. The channel measurement method of claim 1, wherein the spatial domain feature basis vector and the frequency domain feature basis vector are represented using discrete Fourier transform (DFT) basis vectors.

22. The channel measurement method of claim 21, wherein the number of DFT basis vectors that represent the spatial domain feature basis vector and the frequency domain feature basis vector is associated with a parameter $\gamma$, wherein $0 < \gamma \le 1$.

23. The channel measurement method of claim 21, wherein the number of the DFT basis vectors that characterize the spatial domain feature basis vector and the frequency domain feature basis vector are associated with two parameter $\gamma$ and $\lambda$, and wherein, $0 < \gamma \le 1$, $0 < \lambda \le 1$.

24. A Channel measurement method, executed by a terminal, comprising:

receiving configuration information for channel measurement, wherein the configuration information comprises reference resource configuration information for channel measurement, and the configuration information further comprises index information for at least one codebook parameter combination;

performing channel measurement based on an indications of the configuration information;

wherein the at least one codebook parameter combination comprises a first parameter L and a second parameter $p_\upsilon$, with the first parameter representing a number of spatial feature basis vectors to be acquired, and the second parameter representing a number of frequency domain feature basis vectors to be acquired;

wherein in the at least one codebook parameter combination, in comparison to a corresponding preset codebook parameter combination having a preset first parameter and a preset second parameter, the first parameter that is less than the preset first parameter and/or the second parameter that is less than the preset second parameter.

25. The channel measurement method of claim 24, wherein the preset codebook parameter combination comprises a codebook parameter combination from the R16 eTypeII codebook.

26. The channel measurement method of claim 24, wherein a value of the first parameter L in the at least one codebook parameter combination is less than or equal to 3.

27. The channel measurement method of claim 24, wherein, within the at least one codebook parameter combination, for a first layer or a second layer, the second parameter $p_\upsilon$ comprises $\frac{1}{8}$ or $\frac{3}{8}$; and/or within the at least one codebook parameter combination, for a third layer or a fourth layer, the second parameter $p_\upsilon$ comprises $\frac{3}{8}$ or $\frac{1}{16}$.

28. The channel measurement method of claim 24, wherein, within the at least one codebook parameter combination, for a first layer or a second layer, the second parameter $p_\upsilon$ comprises $\frac{1}{8}$ or $\frac{1}{16}$; and/or within the plurality of codebook parameter combinations, for a third layer or a fourth layer, the second parameter $p_\upsilon$ comprises $\frac{3}{16}$ or $\frac{1}{16}$ or $\frac{1}{32}$.

29. The channel measurement method of claim 24, wherein the at least one codebook parameter combination further comprises a third parameter β, which is utilized to regulate a maximum number of non-zero coefficients or a total number of the non-zero coefficients in a coefficient matrix reported by the terminal to a base station.

30. The channel measurement method of claim 29, wherein a value of the third parameter is selected such that each column and each row of the coefficient matrix contains at least one non-zero coefficient that has been chosen for reporting.

31. A Channel measurement method, executed by a base station, comprising:

sending configuration information for channel measurement, wherein the configuration information comprises a number of indicated spatial domain basis vectors and a number of indicated frequency domain feature vectors;

sending a reference signal for channel measurement; and

receiving a channel state information reported by the terminal based on the channel measurements obtained from the reference signals,

wherein the channel state information comprises a precoding matrix indicator (PMI), the PMI comprises non-zero coefficients from a coefficient matrix reported by the terminal and a number of non-zero coefficients corresponding to at least one layer and/or at least one polarization direction.

32. The channel measurement method of claim 31, wherein the PMI is used to enable the base station to construct a precoding matrix and to perform precoding of data through the precoding matrix, wherein coefficients obtained by projecting the precoding matrix onto a spatial domain basis matrix and a frequency domain basis matrix constitute the coefficient matrix, and the coefficients in the coefficient matrix comprise the non-zero coefficients.

33. The channel measurement method of claim 31, wherein the configuration information comprises a parameter combination index, such that for the parameter combination index, the number of indicated spatial domain feature basis vectors is less than or equal to a corresponding preset number of spatial domain feature basis vectors.

34. The channel measurement method of claim 31, wherein the number of indicated spatial domain feature basis vectors is less than or equal to three.

35. The channel measurement method of claim 31, wherein the number of indicated spatial domain feature basis vectors differs for different layers.

36. The channel measurement method of claim 35, wherein the number of indicated spatial domain feature basis vectors is the same for a first layer and a second layer; and the number of indicated spatial domain feature basis vectors is the same for a third layer and a fourth layer.

37. The channel measurement method of claim 31, wherein the configuration information comprises a parameter combination index, such that for the parameter combination index, the number of indicated frequency domain feature basis vectors is less than or equal to the corresponding preset number of frequency domain feature basis vectors.

38. The channel measurement method of claim 31, wherein the number of indicated frequency domain feature basis vectors is **characterized by** the number of PMI sub-bands corresponding to the precoding matrix, the number of PMI sub-bands contained in the channel quality indicator (CQI) sub-bands, and the coefficients selected for frequency domain basis vector in a codebook parameter combination.

39. The channel measurement method of claim 38, wherein, for a first layer or a second layer, the coefficient selected for frequency domain basis vectors in the codebook parameter combination comprises $\frac{1}{8}$ or $\frac{3}{8}$; and/or for a third layer or a fourth layer, the coefficient selected for frequency domain basis vectors in the codebook parameter combination comprises $\frac{3}{8}$ or $\frac{1}{16}$.

40. The channel measurement method of claim 38, wherein, for a first layer or a second layer, the coefficients selected for frequency domain basis vectors in the codebook parameter combination comprise $\frac{1}{8}$ or $\frac{1}{16}$; and/or for a third layer or a fourth layer, the coefficients selected for frequency domain basis vectors in the codebook parameter combination comprise $\frac{3}{16}$ or $\frac{1}{16}$.

41. The channel measurement method of claim 31, wherein the configuration information further comprises a maximum number or a control factor $\beta$ for the number of the non-zero coefficients, wherein a value of the control factor $\beta$ ensures that for the case of reporting the maximum number of the non-zero coefficients for a single layer, there are non-zero coefficients selected for reporting in every column and every row of the coefficient matrix.

42. The channel measurement method of claim 31, wherein the number of the non-zero coefficients is **characterized by** a binary representation of the maximum number of the non-zero coefficients, and the number of bits used to represent the number of the non-zero coefficients is identical to a number of bits used to represent the maximum number of the non-zero coefficients.

43. The channel measurement method of claim 42, wherein the number of the bits representing the maximum number of the non-zero coefficients is obtained by taking a ceiling of a logarithm to a base two of the maximum number of the non-zero coefficients.

44. The channel measurement method of claim 31, wherein the number of non-zero coefficients reported by the terminal for each layer is the same, the base station received the number of non-zero coefficients for a single layer reported by the terminal.

45. The channel measurement method of claim 31, wherein the number of non-zero coefficients reported by the terminal for a first layer and a second layer is the same, and/or the number of non-zero coefficients reported by the terminal for a third layer and a fourth layer is the same.

46. The channel measurement method of claim 45, wherein the number of non-zero coefficients reported by the terminal for the first layer and the second layer is the same, and for the number of non-zero coefficients for the first layer and the second layer, the terminal reports only the number of non-zero coefficients for one layer; and/or the number of non-zero coefficients reported by the terminal for the third layer and the fourth layer is the same, and for the number of non-zero coefficients for the third layer and the fourth layer, the terminal reports only the number of non-zero coefficients for one layer.

47. The channel measurement method of any one of claims 31, 44 to 46, wherein the number of non-zero coefficients reported by the terminal is identical for each polarization direction, and the terminal reports only the number of the non-zero coefficients for a single polarization direction.

48. The channel measurement method of claim 31, wherein the non-zero coefficients reported by the terminal are selected from elements of the coefficient matrix, and a sum of row indexes and column indexes of the selected reported elements is less than a sum of row indexes and column indexes of unselected elements; if a sum of a row index and a column index of two elements is the same, preference is given to selecting an element with a smaller row index or, alternatively, a smaller column index among the two elements.

49. The channel measurement method of claim 31, wherein the non-zero coefficients reported by the terminal to the base station are selected from elements of the coefficient matrix, with a preference for selecting elements of the coefficient matrix in ascending order either by row or by column for reporting.

50. The channel measurement method of claim 31, wherein, when a number of the non-zero coefficients to be reported by the terminal is equal to a maximum number of the non-zero coefficients that the terminal is capable of reporting, the terminal gives up reporting the number of the non-zero coefficients.

51. The channel measurement method of claim 31, wherein the spatial domain feature basis vector and the frequency domain feature basis vector are represented using discrete Fourier transform (DFT) basis vectors.

52. The channel measurement method of claim 51, wherein the number of DFT basis vectors that represent the spatial feature basis vector and the frequency feature basis vector is associated with a parameter .

53. The channel measurement method of claim 51, wherein the number of the DFT basis vectors that characterize the spatial domain feature basis vector and the frequency domain feature basis vector are associated with two parameter $\gamma$ and $\lambda$, and wherein, $0 < \gamma \leq 1$, $0 < \lambda \leq 1$.

54. A channel measurement method, executed by a base station, comprising:

sending configuration information for channel measurement, wherein the configuration information comprises reference resource configuration information for channel measurement, and the configuration information further comprises index information for at least one codebook parameter combination;
receiving a report generated from channel measurements by a terminal based on an indications of the configuration information;
wherein the at least one codebook parameter combination comprises a first parameter L and a second parameter $p_\upsilon$, with the first parameter representing a number of spatial feature basis vectors to be acquired, and the second parameter representing a number of frequency domain feature basis vectors to be acquired;
Wherein in the at least one codebook parameter combination, in comparison to a corresponding preset codebook parameter combination having a preset first parameter and a preset second parameter, the first parameter that is less than the preset first parameter and/or the second parameter that is less than the preset second parameter.

55. The channel measurement method of claim 54, wherein the preset codebook parameter combination comprises a codebook parameter combination from the R16 eTypeII codebook.

56. The channel measurement method of claim 54, wherein a value of the first parameter L in the at least one codebook parameter combination is less than or equal to 3.

57. The channel measurement method of claim 54, wherein, within the at least one codebook parameter combination, for a first layer or a second layer, the second parameter $p_\upsilon$ comprises $\frac{1}{8}$ or $\frac{3}{8}$; and/or within the at least one codebook parameter combination, for a third layer or a fourth layer, the second parameter $p_\upsilon$ comprises $\frac{3}{8}$ or $\frac{1}{16}$.

58. The channel measurement method of claim 54, wherein, within the at least one codebook parameter combination, for a first layer or a second layer, the second parameter $p_\upsilon$ comprises $\frac{1}{8}$ or $\frac{1}{16}$; and/or within the plurality of codebook parameter combinations, for a third layer or a fourth layer, the second parameter $p_\upsilon$ comprises $\frac{3}{16}$ or $\frac{1}{16}$ or $\frac{1}{32}$.

59. The channel measurement method of claim 54, wherein the at least one codebook parameter combination further comprises a third parameter $\beta$, which is utilized to regulate a maximum number of non-zero coefficients or a total number of the non-zero coefficients in a coefficient matrix reported by a terminal to the base station.

60. The channel measurement method of claim 59, wherein a value of the third parameter is selected such that each column and each row of the coefficient matrix contains at least one non-zero coefficient that has been chosen for reporting.

61. A terminal, comprising a processor, the processor being configured to execute instructions to implement the method as recited in any of claims 1 to 23.

62. A terminal, comprising a processor, the processor being configured to execute instructions to implement the method as recited in any of claims 24 to 30.

63. A base station, comprising a processor, the processor being configured to execute instructions to implement the method as recited in any of claims 31 to 53.

64. A base station, comprising a processor, the processor being configured to execute instructions to implement the method as recited in any of claims 54 to 60.

FIG. 1

FIG. 2

receiving configuration information for channel measurement, wherein the configuration information comprises the number of indicated spatial domain feature basis vectors and the number of indicated frequency domain feature basis vectors

receiving reference signals for channel measurement

measuring the channel based on the reference signals, and determining channel state information based on the number of indicated spatial domain feature basis vectors and the number of indicated frequency domain feature basis vectors

reporting the channel state information to the base station

FIG. 3

FIG. 4

FIG. 5

FIG. 6a

M

L

polarizatio
n1

polarizatio
n2

non-zero
coefficients

FIG. 6b

200

210 — receiving configuration information for channel measurement, wherein the configuration information compr i ses reference resource configuration information for the channel measurement, and the configuration information further comprises index information for at least one codebook parameter combination

220 — performing channel measurement based on an indication of the configuration information

FIG. 7

## INTERNATIONAL SEARCH REPORT

<table>
<tr><td colspan="2">International application No.<br><br>**PCT/CN2023/122991**</td></tr>
</table>

**A.    CLASSIFICATION OF SUBJECT MATTER**

H04B 7/06(2006.01)i

According to International Patent Classification (IPC) or to both national classification and IPC

**B.    FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNTXT, ENTXTC, DWPI, CNKI: 非零系数, 个数, 基向量, 空频, 空域, 配置, 频域, 数量, 数目, 网络, 指示, FD, PMI, SD, CSI, report, configuration, number, base vector, non-zero

**C.    DOCUMENTS CONSIDERED TO BE RELEVANT**

| Category* | Citation of document, with indication, where appropriate, of the relevant passages | Relevant to claim No. |
|---|---|---|
| X | WO 2023010245 A1 (GUANGDONG OPPO MOBILE COMMUNICATIONS CO., LTD.) 09 February 2023 (2023-02-09)<br>    description, page 3, line 39 to page 6, line 24 | 1-23, 31-53, 61, 63 |
| A | CN 116686224 A (SAMSUNG ELECTRONICS CO., LTD.) 01 September 2023 (2023-09-01)<br>    entire document | 1-23, 31-53, 61, 63 |
| A | US 2023261714 A1 (LG ELECTRONICS INC.) 17 August 2023 (2023-08-17)<br>    entire document | 1-23, 31-53, 61, 63 |

☐ Further documents are listed in the continuation of Box C.    ☑ See patent family annex.

| | |
|---|---|
| * Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **03 June 2024** | **07 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/122991** |

**Box No. III     Observations where unity of invention is lacking (Continuation of item 3 of first sheet)**

This International Searching Authority found multiple inventions in this international application, as follows:

Group 1 comprises claims 1 and 31 and claims 61 and 63, and group 2 comprises claims 24 and 54 and claims 62 and 64. The same or corresponding technical feature between the claims in group 1 and the claims in group 2 lies in: receiving (or sending) configuration information used for channel measurement. The above-described feature is a customary means in the art, and does not define a contribution which the inventions make over the prior art. In addition, although both of the two groups of claims involve "the number of spatial-domain feature base vectors" and "the number of frequency-domain feature base vectors", the configuration information in the claims in group 1 refers to "the number of spatial-domain feature base vectors and the number of frequency-domain feature base vectors", and the configuration information in the claims in group 2 refers to "index information for a codebook parameter combination". On the basis of the above analysis, the two groups of claims are not linked therebetween by means of a same or corresponding special technical feature, and the claims define two different inventions; moreover, these inventions are not linked therebetween by means of a single general inventive concept. Therefore, the two groups of claims lack unity of invention.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims: it is covered by claims Nos.: **1-23, 31-53, 61, 63**

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

INTERNATIONAL SEARCH REPORT
Information on patent family members

International application No.

**PCT/CN2023/122991**

| Patent document cited in search report | | | Publication date (day/month/year) | Patent family member(s) | | | Publication date (day/month/year) |
|---|---|---|---|---|---|---|---|
| WO | 2023010245 | A1 | 09 February 2023 | CN | 117529886 | A | 06 February 2024 |
| CN | 116686224 | A | 01 September 2023 | US | 2022200666 | A1 | 23 June 2022 |
| | | | | EP | 4233187 | A1 | 30 August 2023 |
| | | | | KR | 20230118186 | A | 10 August 2023 |
| | | | | WO | 2022131879 | A1 | 23 June 2022 |
| US | 2023261714 | A1 | 17 August 2023 | KR | 20230090322 | A | 21 June 2023 |
| | | | | EP | 4236097 | A1 | 30 August 2023 |
| | | | | WO | 2022086309 | A1 | 28 April 2022 |

Form PCT/ISA/210 (patent family annex) (July 2022)